(19) Europäisches Patentamt
European Patent Office
Office européen des brevets

(11) EP 4 317 215 A1

(12) EUROPEAN PATENT APPLICATION
published in accordance with Art. 153(4) EPC

(43) Date of publication:
07.02.2024 Bulletin 2024/06

(21) Application number: 22781056.1

(22) Date of filing: 30.03.2022

(51) International Patent Classification (IPC):
*C08F 210/02* *(2006.01)* *C08F 210/16* *(2006.01)*
*C08L 23/08* *(2006.01)*

(52) Cooperative Patent Classification (CPC):
C08F 210/02; C08F 210/16; C08L 23/08

(86) International application number:
PCT/JP2022/015848

(87) International publication number:
WO 2022/210845 (06.10.2022 Gazette 2022/40)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 31.03.2021 JP 2021062159
04.03.2022 JP 2022033930

(71) Applicants:
- Mitsui Chemicals, Inc.
Tokyo 104-0028 (JP)
- Prime Polymer Co., Ltd.
Tokyo 104-0028 (JP)

(72) Inventors:
- MATSUBARA, Shinya
Ichihara-shi, Chiba 299-0108 (JP)
- HATO, Kazuki
Ichihara-shi, Chiba 299-0108 (JP)
- TATSUMI, Shuhei
Ichihara-shi, Chiba 299-0108 (JP)
- TAMURA, Naoya
Sodegaura-shi, Chiba 299-0265 (JP)
- TANAKA, Youichi
Sodegaura-shi, Chiba 299-0265 (JP)
- KENGOYAMA, Chihiro
Sodegaura-shi, Chiba 299-0265 (JP)
- UEMATSU, Yudai
Kuga-gun, Yamaguchi 740-0061 (JP)
- YOSHINO, Shota
Kuga-gun, Yamaguchi 740-0061 (JP)
- TANAKA, Yuta
Kuga-gun, Yamaguchi 740-0061 (JP)

(74) Representative: J A Kemp LLP
80 Turnmill Street
London EC1M 5QU (GB)

# (54) ETHYLENE RESIN COMPOSITION AND MOLDED BODY

(57) [Problem] To provide an ethylene resin composition that can produce a shaped article (especially, a film) having excellent mechanical strength and well-balanced transparency and blocking resistance with excellent formability.

[Solution to problem] An ethylene resin composition (Z) including an ethylene-$\alpha$-olefin copolymer (A) satisfying requirements (1) to (4) and an ethylene-$\alpha$-olefin copolymer (B) satisfying requirements (a) to (c):
(1) a density of 890 to 935 kg/$m^3$,
(2) MFR (190°C, a load of 2.16 kg) of 0.1 g/10 min or more and less than 3.0 g/10 min,
(3) MT (melt tension)/$\eta^*$ (shear viscosity) of $1.20 \times 10^{-4}$ to $2.90 \times 10^{-4}$g/P, and
(4) $0.01 \times 10^{-13} \times Mw^{3.4} \leq \eta_0$ (zero-shear viscosity) $\leq 3.5 \times 10\text{-}13 \times Mw^{3.4}$,
(a) a density of 890 to 930 kg/$m^3$,
(b) MFR (190°C, a load of 2.16 kg) of 0.1 to 10 g/10 min, and
(c) $1.90 \times 10^{-4} \times Mw^{0.776} \leq [\eta] \leq 2.80 \times 10^{-4} \times Mw^{0.776}$.



Processed by Luminess, 75001 PARIS (FR)

## Description

Technical Field

The present invention relates to an ethylene resin composition, and a shaped article, a film, and a multilayer film including the composition.

Background Art

Ethylene polymers are used in various shaping techniques and applications, and various characteristics are required for such ethylene polymers in accordance with shaping techniques and applications. For example, in formation with a T-die, neck-in occurs, in which film ends shrink in the center direction. When neck-in occurs, a phenomenon occurs in which the film width decreases as well as the film ends become thicker than the film center. Thus, when neck-in is large, troubles occurs, such as a decrease in the product yield and inability to produce products having a desired width. Troubles may occur, such as sagging or breakage of melt films in hollow molding, and fluctuations or breakage of melt films in inflation molding. In order to prevent these troubles, it is necessary to select an ethylene polymer having a large melt tension for its molecular weight.

An ethylene polymer having no long chain branching obtained by using a metallocene catalyst excels in mechanical strength but has a problem in formability. For example, neck-in increases in formation with a T-die, sagging of melt films occurs in hollow molding, and wrinkles of films due to fluctuations of the melt films occur in inflation molding. High-pressure low-density polyethylene has a large melt tension and excels in formability but is inferior in mechanical strength such as tensile strength, tear strength, or impact strength because of having complicated long chain branching.

In order to solve these problems, various ethylene polymers having long chain branching introduced therein have been disclosed. Patent Literature 1 proposes a composition of an ethylene polymer and high-pressure low-density polyethylene obtained by using a metallocene catalyst. However, when the content of the high-pressure low-density polyethylene is high, poor mechanical strength such as tensile strength, tear strength, or impact strength is expected, and when the content of the high- process low-density polyethylene is low, the melt tension is not sufficiently improved, and thus deterioration in the formability, for example, large neck-in is expected.

Patent Literature 2 discloses an ethylene polymer obtained by solution polymerization in the presence of a catalyst including ethylenebis(indenyl)hafnium dichloride and methylalumoxane, Patent Literature 3 discloses an ethylene polymer obtained by gas phase polymerization in the presence of a catalyst including ethylenebis(indenyl)zirconium dichloride and methylalumoxane supported on silica, Patent Literature 4 discloses an ethylene polymer obtained by solution polymerization in the presence of a constrained geometry catalyst, and Patent Literature 5 discloses an ethylene polymer obtained by gas phase polymerization in the presence of a catalyst including racemic and meso isomers of $Me_2Si(2\text{-}Me\text{-}Ind)_2$ and methylalumoxane supported on silica. It is described that these ethylene polymers have an improved melt tension and excel in formability in comparison with linear ethylene polymers having no long chain branching. However, their neck-in is still large. Thus, it is expected that an improvement in the formability is insufficient and an that improvement in the blocking resistance of films is also insufficient. When an ethylene polymer is used in a film, an anti-blocking agent is generally added in order to prevent blocking, but addition of a large amount of an anti-blocking agent may not be preferred in some applications, from the viewpoint of an increase in the costs and hygiene for contents. Accordingly, films excelling in blocking resistance even without use of an anti-blocking agent are desired.

Patent Literature 6, 7, 8, and 9 discloses ethylene polymers and ethylene resin compositions, the ethylene polymers satisfying a specific relationship between the intrinsic viscosity and the weight-average molecular weight, a specific relationship between the melt tension and the shear viscosity, or a specific relationship between the zero-shear viscosity and the weight-average molecular weight. These ethylene polymers have improved take-off surging (draw resonance), having improvements in neck-in in formation with a T-die and inflation moldability over conventional ethylene polymers including long chain branching introduced by using a metallocene catalyst. However, a further improvement in the mechanical strength and an improvement in the transparency are desired. Although ones having higher external haze due to minute irregularities of the film surface excel in blocking resistance, ones having a well-balanced transparency and blocking resistance are desired, from the viewpoint of visibility of the content and examination of defects in the film. Also when an ethylene polymer is used for a bottle, for example, an improvement in the transparency is desired as well.

Citation List

Patent Literature

Patent Literature 1: JP H07-026079A
Patent Literature 2: JP H02-276807A
Patent Literature 3: JP H04-213309A
Patent Literature 4: WO 93/08221
Patent Literature 5: JP H08-311260A
Patent Literature 6: JP 2006-233207A
Patent Literature 7: JP 2009-197225A
Patent Literature 8: WO 2013/099927A
Patent Literature 9: JP 2014-177506A

## Summary of Invention

### Technical Problem

In view of these conventional techniques, a first object of the present invention is to provide an ethylene resin composition that can produce a shaped article (e.g., a film and a multilayer film including the film; the same applies to the following.) having superior mechanical strength with superior formability compared with conventionally known ethylene resins, and a shaped article obtained from the ethylene resin composition.

A second object of the present invention is to provide an ethylene resin composition that can produce a shaped article having superior mechanical strength and well-balanced transparency and blocking resistance with superior formability compared with conventionally known ethylene resins, and a shaped article obtained from the ethylene resin composition.

Further, a third object of the present invention is to provide an ethylene resin composition that can produce a shaped article having superior mechanical strength with particularly superior formability compared with conventionally known ethylene resins, and a shaped article obtained from the ethylene resin composition.

### Solution to Problem

The present inventors have studied diligently and, as a result, have found that a composition including two ethylene polymers each having specific melting characteristics and a specific molecular structure can achieve the first object, in other words, can produce a shaped article (e.g., a film, and a multilayer film including the film) having excellent mechanical strength with excellent formability (i.e., with excellent melt film stability in inflation molding, having small neck-in in formation with a T-die, and no occurrence of take-off surging (draw resonance)), having completed the present invention.

The present invention to solve the first object relates to the following [1], for example.

[1] An ethylene resin composition (Z) comprising:

an ethylene-$\alpha$-olefin copolymer (A) which is a copolymer of ethylene and one or more $\alpha$-olefins having 4 to 10 carbon atoms and which satisfies the following requirements (1) to (4); and
an ethylene-$\alpha$-olefin copolymer (B) which is a copolymer of ethylene and one or more $\alpha$-olefins having 4 to 10 carbon atoms and which satisfies the following requirements (a) to (c) :

(1) the density is in a range of 890 kg/$m^3$ or more and 935 kg/$m^3$ or less,
(2) the melt flow rate (MFR) at 190°C under a load of 2.16 kg is in a range of 0.1 g/10 min or more and less than 3.0 g/10 min,
(3) the ratio [MT/$\eta$* (g/P)] of the melt tension [MT (g)] at 190°C to the shear viscosity [$\eta$* (P)] at 200°C and an angular velocity of 1.0 rad/s is in a range of $1.20 \times 10^{-4}$ or more and $2.90 \times 10^{-4}$ or less, and
(4) the zero-shear viscosity [$\eta_0$ (P)] at 200°C and the weight-average molecular weight (Mw) measured by GPC-viscometry (GPC-VISCO) satisfy the following equation (Eq-1):

$$0.01 \times 10^{-13} \times Mw^{3.4} \leq \eta_0 \leq 3.5 \times 10^{-13} \times Mw^{3.4} \quad \cdots (Eq-1),$$

(a) the density is in a range of 890 kg/$m^3$ or more and 930 kg/$m^3$ or less,
(b) the melt flow rate (MFR) at 190°C under a load of 2.16 kg is in a range of 0.1 g/10 min or more and 10 g/10 min or less, and
(c) the intrinsic viscosity [[$\eta$] (dl/g)] measured in decalin at 135°C and the weight-average molecular

weight (Mw) measured by GPC-viscometry (GPC-VISCO) satisfy the following equation (Eq-4):

$$1.90 \times 10^{-4} \times Mw^{0.776} \leq [\eta] \leq 2.80 \times 10^{-4} \times Mw^{0.776} \cdots (Eq\text{-}4).$$

The present inventors have also found that a composition comprising the two ethylene polymers at a specific ratio among the ethylene resin compositions (Z) of [1] can achieve the second object, in other words, can produce a shaped article having excellent mechanical strength and well-balanced transparency and blocking resistance with excellent formability. The present invention to solve the second object relates to the following [2], for example.

[2] The ethylene resin composition (Z) according to [1], having a mass fraction ($W_A$) of the ethylene-α-olefin copolymer (A) that is 1% by mass or more and 50% by mass or less, and a mass fraction ($W_B$) of the ethylene-α-olefin copolymer (B) that is 50% by mass or more and 99% by mass or less, provided that the sum of $W_A$ and $W_B$ is 100% by mass.

The present inventors further have found that a composition comprising the two ethylene polymers at a specific ratio among the ethylene resin compositions (Z) of [1] can achieve the third object, in other words, can produce a shaped article having excellent mechanical strength with particularly excellent formability. The present invention to solve the third object relates to the following [3], for example.

[3] The ethylene resin composition (Z) according to [1], having a mass fraction ($W_A$) of the ethylene-α-olefin copolymer (A) that is more than 50% by mass and 99% by mass or less, and a mass fraction ($W_B$) of the ethylene-α-olefin copolymer (B) that is 1% by mass or more and less than 50% by mass, provided that the sum of $W_A$ and $W_B$ is 100% by mass.

The present invention further relates to the following [4] to [12], for example.

[4] The ethylene resin composition (Z) according to any of [1] to [3], wherein the ethylene-α-olefin copolymer (A) satisfies the following requirement (5):

(5) the number-average molecular weight (Mn), the weight-average molecular weight (Mw), and the z-average molecular weight (Mz) measured by GPC-viscometry (GPC-VISCO) satisfy the following equation (Eq-2):

$$-7.0 \leq Mz/Mw - Mw/Mn \leq 2.0 \cdots (Eq\text{-}2).$$

[5] The ethylene resin composition (Z) according to any of [1] to [4], wherein the ethylene-α-olefin copolymer (A) further satisfies the following requirement (6):

(6) the ratio Mz/Mw of the z-average molecular weight (Mz) to the weight-average molecular weight (Mw) measured by GPC-viscometry (GPC-VISCO) is in a range of 4.0 or more and 15.0 or less.

[6] The ethylene resin composition (Z) according to any of [1] to [5], wherein the ethylene-α-olefin copolymer (A) further satisfies the following requirement (7):

(7) the intrinsic viscosity [[η] (dl/g)] measured in decalin at 135°C and the weight-average molecular weight (Mw) measured by GPC-viscometry (GPC-VISCO) satisfy the following equation (Eq-3):

$$0.7 \times 10^{-4} \times Mw^{0.776} \leq [\eta] \leq 1.65 \times 10^{-4} \times Mw^{0.776} \cdots (Eq\text{-}3).$$

[7] The ethylene resin composition (Z) according to any of [1] to [6], wherein the ethylene-α-olefin copolymer (A) satisfies the following requirement (8):

(8) the total number (/1000 C) of vinyls, vinylidenes, disubstituted internal olefins, and trisubstituted internal olefins per 1000 carbon atoms measured by $^1$H-NMR is in a range of 0.1 or more and 1.0 or less.

[8] The ethylene resin composition (Z) according to any of [1] to [7], wherein the ethylene-α-olefin copolymer (A) satisfies the following requirement (9):

(9) a plurality of peaks is present in a melting curve obtained by differential scanning calorimetry (DSC).

[9] The ethylene resin composition (Z) according to any of [1] to [8], further comprising a thermoplastic resin excluding the ethylene-α-olefin copolymer (A) and the ethylene-α-olefin copolymer (B).

[10] A shaped article comprising the ethylene resin composition (Z) according to any of [1] to [9].

[11] A film comprising the ethylene resin composition (Z) according to any of [1] to [9].

[12] A multilayer film comprising a layer comprising the ethylene resin composition (Z) according to any of [1] to [9] .

Advantageous Effects of Invention

According to the ethylene resin composition (Z) of the present invention, a shaped article (especially, a film) having excellent mechanical strength can be suitably produced with excellent formability.

Additionally, according to the ethylene resin composition (Z) of [2] according to the present invention, a shaped article (especially, a film) having excellent mechanical strength and well-balanced transparency and blocking resistance can be suitably produced with excellent formability.

Further, according to the ethylene resin composition (Z) of [3] according to the present invention, a shaped article (especially, a film) having excellent mechanical strength can be suitably produced with particularly excellent formability.

Description of Embodiments

Hereinafter, an ethylene resin composition (Z) according to the present invention will be described specifically along with an ethylene-α-olefin copolymer (A) and an ethylene-α-olefin copolymer (B), which are components thereof.

[Ethylene resin composition (Z)]

[Ethylene-α-olefin copolymer (A)]

The ethylene-α-olefin copolymer (A) is a copolymer of ethylene and one or more α-olefins having 4 to 10 carbon atoms, and preferably of ethylene and one or more α-olefins having 6 to 10 carbon atoms. Examples of the one or more α-olefins having 4 to 10 carbon atoms used for copolymerization with ethylene include 1-butene, 1-hexene, 4-methyl-1-pentene, 1-octene, and 1-decene.

The ethylene-α-olefin copolymer (A) has characteristics shown in the following (1) to (4).

(1) The density is in the range of 890 $kg/m^3$ or more and 935 $kg/m^3$ or less, preferably 900 $kg/m^3$ or more and 925 $kg/m^3$ or less, more preferably 905 $kg/m^3$ or more and 922 $kg/m^3$ or less.

When the density is equal to or larger than the lower limit, the surface of a film molded from the ethylene resin composition (Z) has little stickiness, and when the density is equal to or smaller than the upper limit, the impact strength of a film molded from the ethylene resin composition (Z) becomes favorable, and mechanical strength, such as heat seal strength and bag breaking strength of a bag formed of the film, is favorable.

The density depends on the α-olefin content of the ethylene-α-olefin copolymer. The lower the α-olefin content, the higher the density, and the higher the α-olefin content, the lower the density becomes. The α-olefin content of the ethylene-α-olefin copolymer is determined in accordance with the composition ratio of the α-olefin and ethylene in the polymerization system (α-olefin/ethylene) (e.g., Walter Kaminsky, Makromol. Chem. 193, p. 606 (1992)). Thus, an ethylene-α-olefin copolymer having a density in the above-described range can be produced by increasing or decreasing α-olefin/ethylene.

The density is measured as follows.

A strand obtained in the measurement of the MFR is heat treated at 100°C for 30 minutes, left at room temperature for additional 1 hour, and then the density is measured by the density gradient tube method.

(2) The melt flow rate (MFR) is in the range of 0.1 g/10 min or more and less than 3.0 g/10 min, preferably 0.3 g/10 min or more and 2.5 g/10 min or less, more preferably 0.5 g/10 min or more and 2.0 g/10 min or less.

When the melt flow rate (MFR) is equal to or more than the lower limit, the shear viscosity of the ethylene resin composition (Z) is not excessively high, and an extrusion load is favorable. When the melt flow rate (MFR) is equal to or less than the upper limit, the mechanical strength of the ethylene resin composition (Z) is favorable.

Melt flow rate (MFR) strongly depends on the molecular weight; the smaller the melt flow rate (MFR), the larger the molecular weight, and the larger the melt flow rate (MFR), the smaller the molecular weight becomes. The molecular weight of the ethylene polymer is known to be determined by the composition ratio of hydrogen and ethylene (hydrogen/ethylene) in the polymerization system (e.g., ed. by Kazuo Soga et al., "Catalytic Olefin Polymerization", Kodansha Scientific, 1990, p. 376). Thus, the melt flow rate (MFR) of the ethylene polymer can be increased or decreased by increasing or decreasing hydrogen/ethylene. The melt flow rate (MFR) is measured under conditions of 190°C and a load of 2.16 kg in accordance with JIS K 7210.

(3) The ratio [MT/η* (g/P)] of the melt tension [MT (g)] to the shear viscosity [η* (P)] at 200°C and an angular velocity of 1.0 rad/s (P is Poise.) is in the range of $1.20 \times 10^{-4}$ to $2.90 \times 10^{-4}$, preferably $1.30 \times 10^{-4}$ to $2.70 \times 10^{-4}$,

more preferably $1.30 \times 10^{-4}$ to $2.45 \times 10^{-4}$.

When MT/η* is equal to or more than the lower limit, the ethylene-α-olefin copolymer (A) has a high melt tension for its molecular weight, and thus the ethylene resin composition (Z) excels in formability. When MT/η* is equal to or less than the upper limit, the ethylene resin composition (Z) excels in mechanical strength.

MT/η* depends on the long chain branching content of the ethylene polymer; the higher the long chain branching content, the larger the MT/η*, and the lower the long chain branching content, the smaller the MT/η*. Long chain branching is defined as a branched structure having a length equal to or longer than the entanglement molecular weight (Me) included in the ethylene polymer. It is known that introduction of long chain branching leads to significant changes in the melt physical properties and forming processability of the ethylene polymer (e.g., ed. by Kazuo Matsuura et al., "Polyethylene Technique Reading Book", Kogyo Chosakai Publishing Co., Ltd., 2001, p.32, 36).

MT/η* is adjustable by the type of a component (A) or a solid support (S) in the catalyst for olefin polymerization (X) described below. Even when the same catalyst for olefin polymerization (X) is used, MT/η* is adjustable by the polymerization conditions or the polymerization process. For example, MT/η* can be lowered by raising the ethylene partial pressure. MT/η* near the lower limit can be obtained under the production conditions of Production Example 3 described below, and MT/η* near the upper limit can be obtained under the production conditions of Production Example 5 described below.

The melt tension [MT (g)] is measured as follows. The melt tension (MT) (unit: g) is determined by measuring the stress in stretching at a constant speed. A capillary rheometer (e.g., a capillary rheometer: CAPILOGRAPH 1D manufactured by Toyo Seiki Seisaku-sho, Ltd. was used in Examples described below.) is used for the measurement. The conditions are as follows: resin temperature of 190°C, melting time of 6 minutes, barrel diameter of 9.55 mmφ, extrusion speed of 15 mm/min, winding speed of 24 m/min (when the molten filament is broken, winding speed is reduced with increment of 5 m/min), nozzle diameter of 2.095 mmφ, and nozzle length of 8 mm.

The shear viscosity [η* (P)] at 200°C and an angular velocity of 1.0 rad/s is measured as follows. For the shear viscosity (η*), the angular velocity [ω (rad/s)] dispersion of the shear viscosity (η*) at a measurement temperature of 200°C is measured in the range of $0.01 \le \omega \le 100$. For the measurement, a viscoelastic measurement apparatus is used (e.g., a viscoelastic measurement apparatus: Physica MCR301 manufactured by Anton Paar GmbH was used in Examples described below.), a 25 mmφ parallel plate is used as a sample holder, and the sample thickness is set to about 2.0 mm. The number of measurement points is 5 per digit of ω. An amount of strain is appropriately selected in a range from 3 to 10% such that a torque is detectable in the measurement range and an over-torque is prevented.

A sample for use in shear viscosity measurement is prepared by press-forming a measurement sample of 2 mm in thickness using a forming machine (e.g., a press-forming machine manufactured by Sinto Metal Industries, Ltd. was used in Examples described below.) under conditions including a preheating temperature of 190°C, a preheating time of 5 minutes, a heating temperature of 190°C, a heating time of 2 minutes, a heating pressure of 100 kgf/cm$^2$, a cooling temperature of 20°C, a cooling time of 5 minutes, and a cooling pressure of 100 kgf/cm$^2$.

(4) The zero-shear viscosity [$\eta_0$ (P)] at 200°C and the weight-average molecular weight (Mw) measured by GPC-viscometry (GPC-VISCO) satisfy the following equation (Eq-1):

$$0.01 \times 10^{-13} \times Mw^{3.4} \le \eta_0 \le 3.5 \times 10^{-13} \times Mw^{3.4} \quad \cdots (Eq\text{-}1),$$

preferably satisfy the following (Eq-1'):

$$0.05 \times 10^{-13} \times Mw^{3.4} \le \eta_0 \le 3.0 \times 10^{-13} \times Mw^{3.4} \quad \cdots (Eq\text{-}1'),$$

and more preferably satisfy the following (Eq-1"):

$$0.1 \times 10^{-13} \times Mw^{3.4} \le \eta_0 \le 2.5 \times 10^{-13} \times Mw^{3.4} \quad \cdots (Eq\text{-}1'').$$

When the zero-shear viscosity [$\eta_0$ (P)] is double logarithmically plotted against the weight-average molecular weight (Mw), a resin of which the elongational viscosity exhibits no strain hardening, such as a linear ethylene polymer having no long chain branching follows the power law with a slope of 3.4. In contrast, a resin of which the elongational viscosity exhibits strain rate hardening, such as high-pressure low-density polyethylene, is known to exhibit a zero-shear viscosity [$\eta_0$ (P)] lower than the power law (C Gabriel, H. Munstedt, J. Rheol., 47 (3), 619 (2003)).

When the zero-shear viscosity [$\eta_0$ (P)] at 200°C is equal to or less than the upper limit, the elongational viscosity of the ethylene polymer exhibits strain rate hardening, and thus no take-off surging (draw resonance) occurs. Because of shorter long chain branching and more molecules to connect between a crystal lamella and a crystal lamella for the

same molecular weight, the ethylene resin composition (Z) excels in mechanical strength (impact resistance).

When a molten resin flows into a dice, an extensional stress is generated by an extensional flow. When this extensional stress exceeds the critical value, a breakage brittlely occurs, an unstable flow at the outlet of the dice, called a melt fracture, is generated, and minute irregularities are formed on the surface of a molded article (F. N. Cogswell, Polymer Melt Rheology, Wiley, 1981). When the zero-shear viscosity [$\eta_0$ (P)] is within the range, the extensional stress increases at a strain rate in common forming processing, and a melt fracture is moderately generated. Minute irregularities are moderately formed on the film surface by this melt fracture, and thus a film to be obtained from the ethylene resin composition (Z) has well-balanced transparency and blocking resistance.

The relationship between the zero-shear viscosity [$\eta_0$ (P)] and the weight-average molecular weight (Mw) is considered to depend on the content and length of long chain branching in the ethylene polymer. Then, it is considered that the higher the long chain branching content and the shorter the length of the long chain branching, the smaller the value of the zero-shear viscosity [$\eta_0$ (P)] is indicated, and the lower the long chain branching content and the longer the length of the long chain branching, the larger the value of the zero-shear viscosity [$\eta_0$ (P)] is indicated.

The zero-shear viscosity [$\eta_0$ (P)] is adjustable by the type of the component (A) or the solid support (S) in the catalyst for olefin polymerization (X) described below. Even when the same catalyst for olefin polymerization (X) is used, the zero-shear viscosity [$\eta_0$ (P)] is adjustable by the polymerization conditions or the polymerization process; the zero-shear viscosity [$\eta_0$ (P)] can be raised by raising the ethylene partial pressure, for example. The zero-shear viscosity [$\eta_0$ (P)] near the lower limit can be obtained under the production conditions of Production Example 9 described below, and the zero-shear viscosity [$\eta_0$ (P)] near the upper limit can be obtained under the production conditions of Production Example 6 described below.

The zero-shear viscosity [$\eta_0$ (P)] at 200°C is measured as follows.

The angular velocity $\omega$ (rad/s) dispersion of the shear viscosity ($\eta^*$) at a measurement temperature of 200°C is measured in the range of $0.01 \le \omega \le 100$. For the measurements, a viscoelastic measurement apparatus is used (e.g., a viscoelastic measurement apparatus: Physica MCR301 manufactured by Anton Paar GmbH was used in Examples described below.), a 25 mm$\varphi$ parallel plate is used as a sample holder, and the sample thickness is set to about 2.0 mm. The number of measurement points is 5 per digit of $\omega$. An amount of strain is appropriately selected in a range from 3 to 10% such that a torque is detectable in the measurement range and an over-torque is prevented.

A sample for use in shear viscosity measurement is prepared by press-forming a measurement sample of 2 mm in thickness using a forming machine (e.g., a press-forming machine manufactured by Sinto Metal Industries, Ltd. was used in Examples described below.) under conditions including a preheating temperature of 190°C, a preheating time of 5 minutes, a heating temperature of 190°C, a heating time of 2 minutes, a heating pressure of 100 kgf/cm$^2$, a cooling temperature of 20°C, a cooling time of 5 minutes, and a cooling pressure of 100 kgf/cm$^2$.

The zero-shear viscosity ($\eta_0$) is calculated by fitting the Carreau model of the following equation to a measured rheology curve [angular velocity ($\omega$) dispersion of the shear viscosity ($\eta^*$)] by a non-linear least squares method.

$$\eta^* = \eta_0[1 + (\lambda\omega)^a]^{(n-1)/a}$$

[$\lambda$ represents a parameter having a dimension of time, a represents a fitting parameter, and n represents the power law index of the material.]

Fitting by the non-linear least squares method is conducted such that d in the following equation is minimized.

$$d = \sum_{\omega=0.02512}^{100} \left[Log_{10}\eta_{exp}(\omega) - Log_{10}\eta_{calc}(\omega)\right]^2$$

[$\eta_{exp}(\omega)$ represents the measured shear viscosity, and $\eta_{calc}(\omega)$ represents the shear viscosity calculated from the Carreau model.]

The weight-average molecular weight (Mw), for example, is measured by gel permeation chromatography (GPC) as follows.

A differential refractometer and a capillary viscometer are used as detectors, the column temperature is set to 145°C, o-dichlorobenzene is used as the mobile phase, the flow rate is set to 1.0 ml/min, the sample concentration is set to 0.1 wt%, and polystyrene is used as the standard polymer. In Examples described below, a GPC-viscometer (GPC-VISCO) PL-GPC220 manufactured by Agilent Technologies was used as the measurement apparatus, two Agilent PLgel Olexis columns were used as analysis columns, and polystyrene manufactured by Tosoh Corporation was used as the standard polystyrene. For molecular weight calculation, a measured viscosity is calculated with the viscometer and the refractometer, and the number-average molecular weight (Mn), the weight-average molecular weight (Mw), the

z-average molecular weight (Mz), and the molecular weight distribution (Mw/Mn, Mz/Mw) are determined by measured universal calibration.

The ethylene-α-olefin copolymer (A) preferably has characteristics shown by the following (5).

(5) The number-average molecular weight (Mn), the weight-average molecular weight (Mw), and the z-average molecular weight (Mz) measured by GPC-viscometry (GPC-VISCO) satisfy the following equation (Eq-2):

$$-7.0 \leq Mz/Mw - Mw/Mn \leq 2.0 \cdots (Eq\text{-}2),$$

preferably satisfy the following equation (Eq-2'):

$$-6.0 \leq Mz/Mw - Mw/Mn \leq 1.0 \cdots (Eq\text{-}2'),$$

and more preferably satisfy the following equation (Eq-2"):

$$-5.0 \leq Mz/Mw - Mw/Mn \leq 0.0 \cdots (Eq\text{-}2'').$$

When Mz/Mw - Mw/Mn is large, the molecular weight distribution spreads out in the high molecular weight side, when Mz/Mw - Mw/Mn is equal to or more than the lower limit, the ethylene resin composition (Z) excels in melt film stability, and when Mz/Mw - Mw/Mn is equal to or less than the upper limit, the ethylene resin composition (Z) excels in thin film formability.

Mz/Mw - Mw/Mn is adjustable by the type of the component (A) or the solid support (S) in the catalyst for olefin polymerization (X) described below, and is adjustable by the polymerization conditions or the polymerization process even when the same catalyst for olefin polymerization (X) is used. Mz/Mw - Mw/Mn near the lower limit can be obtained under the production conditions of Production Example 9 described below, and Mz/Mw - Mw/Mn near the upper limit can be obtained under the production conditions of Production Example 10 described below.

The number-average molecular weight(Mn), the weight-average molecular weight (Mw), and the z-average molecular weight (Mz) are measured by the methods described above.

The ethylene-α-olefin copolymer (A) preferably has characteristics shown by the following (6).

(6) The ratio (Mz/Mw) of the z-average molecular weight (Mz) to the weight-average molecular weight (Mw) measured by GPC-viscometry (GPC-VISCO) is in a range from 4.0 to 15.0, preferably 5.0 to 12.0, more preferably 6.0 to 10.0. The larger the Mz/Mw, the more the high molecular weight component; and Mz/Mw of equal to or more than the lower limit results in excellent blocking resistance, and Mz/Mw of equal to or less than the upper limit results in excellent transparency.

Mz/Mw is adjustable by the type of the component (A) or the solid support (S) in the catalyst for olefin polymerization (X) described below, and is adjustable by the polymerization conditions or the polymerization process even when the same catalyst for olefin polymerization (X) is used. Mz/Mw near the lower limit can be obtained under the production conditions of Production Example 3 described below, and Mz/Mw near the upper limit can be obtained under the production conditions of Production Example 10 described below.

The ethylene-α-olefin copolymer (A) preferably has characteristics shown by the following (7).

(7) The intrinsic viscosity [[η] (dl/g)] measured in decalin at 135°C and the weight-average molecular weight (Mw) measured by GPC-viscometry (GPC-VISCO) satisfy the following

equation (Eq-3): $$0.7 \times 10^{-4} \times Mw^{0.776} \leq [\eta] \leq 1.65 \times 10^{-4} \times Mw^{0.776} \cdots (Eq\text{-}3),$$

preferably satisfy the following (Eq-3'):

$$0.7 \times 10^{-4} \times Mw^{0.776} \leq [\eta] \leq 1.40 \times 10^{-4} \times Mw^{0.776} \cdots (Eq\text{-}3'),$$

and more preferably satisfy the following (Eq-3"):

$$0.8 \times 10^{-4} \times Mw^{0.776} \leq [\eta] \leq 1.20 \times 10^{-4} \times Mw^{0.776} \cdots \text{(Eq-3")}.$$

When long chain branching is introduced in the ethylene polymer, the intrinsic viscosity [[η] (dl/g)] is known to decrease for its molecular weight, in comparison with a linear ethylene polymer having no long chain branching (e.g., Walther Burchard, ADVANCES IN POLYMER SCIENCE, 143, Branched Polymer II, p. 137(1999)). Thus, when the intrinsic viscosity [[η] (dl/g)] is $1.65 \times 10^{-4} \times Mw^{0.776}$ or less, the ethylene polymer has many long chain branching and excels in formability and flowability.

The intrinsic viscosity [[η] (dl/g)] is adjustable by the type of the component (A) or the solid support (S) in the catalyst for olefin polymerization (X) described below. Even when the same catalyst for olefin polymerization (X) is used, the intrinsic viscosity [[η] (dl/g)] is adjustable by the polymerization conditions or the polymerization process; the intrinsic viscosity [[η] (dl/g)] can be raised by raising the ethylene partial pressure, for example. The intrinsic viscosity [[η] (dl/g)] near the lower limit can be obtained under the production conditions of Production Example 9 described below, and the intrinsic viscosity [[η] (dl/g)] near the upper limit can be obtained under the production conditions of Production Example 2 described below.

The intrinsic viscosity [[η] (dl/g)] is measured as follows using a decalin solvent. About 20 mg of a measurement sample is dissolved in 15 ml of decalin, and the specific viscosity ηsp is measured in an oil bath at 135°C. To the decalin solution, 5 ml of the decalin solvent is added to dilute the solution, and then the specific viscosity ηsp is measured in the same manner. This dilution operation is repeated two more times, and as shown in the following equation, a value of ηsp/C when the concentration (C) is extrapolated to 0 is taken as the intrinsic viscosity [η] (unit: dl/g).

$$[\eta] = \lim(\eta sp/C)\ (C \to 0)$$

The weight-average molecular weight (Mw) is measured by the method described above.

The ethylene-α-olefin copolymer (A) preferably has characteristics shown by the following (8).

(8) The number of vinyls, vinylidenes, disubstituted internal olefins, and trisubstituted internal olefins measured by $^1$H-NMR satisfies the following equation (Eq-3):

$$0.1 \leq \text{vinyls + vinylidenes + disubstituted internal olefins + trisubstituted internal olefins} \leq 1.0 \cdots \text{(Eq-3)},$$

preferably satisfies the following equation (Eq-3'):

$$0.3 \leq \text{vinyls + vinylidenes + disubstituted internal olefins + trisubstituted internal olefins} \leq 0.9 \cdots \text{(Eq-3')},$$

and more preferably satisfies the following equation (Eq-3"):

$$0.5 \leq \text{vinyls + vinylidenes + disubstituted internal olefins + trisubstituted internal olefins} \leq 0.8 \cdots \text{(Eq-3")}.$$

The number of vinyls, vinylidenes, disubstituted internal olefins, and trisubstituted internal olefins is the number per 1000 carbon atoms contained in the polymer, measured by a $^1$H-NMR method. The ratio of amounts generated and the number of vinyls, vinylidenes, disubstituted internal olefins, and trisubstituted internal olefins are known to increase or decrease in accordance with a transition metal compound to be used (H. SAIKI, S. MAKOTO, T. MASAO, S. MORIHIKO, and Y. AKIHIRO, J. Polym. Sci., A: Polym. Chem., 38, 4641 (2000)). These are adjustable by the type of the component (A) or the solid support (S) in the catalyst for olefin polymerization (X) described below. Even when the same catalyst for olefin polymerization (X) is used, adjustment by the polymerization conditions or the polymerization process is possible, and increase or decrease is also possible by increasing or decreasing the ethylene partial pressure, for example.

When the number of vinyls + vinylidenes + disubstituted internal olefins + trisubstituted internal olefins is equal to or more than the lower limit, long chain branching is likely to be generated, and formability is excellent; when the number of vinyls + vinylidenes + disubstituted internal olefins + trisubstituted internal olefins is equal to or less than the upper limit, a melt film of extrusion lamination is more unlikely to be oxidized, heat-sealability is excellent, and excels in transparency and shaped articles excel in transparency and mechanical strength.

The number of vinyls, vinylidenes, disubstituted internal olefins, and trisubstituted internal olefins measured by $^1$H-NMR (500MHz) is measured as follows (e.g., an AVANCE III (cryoprobe) type nuclear magnetic resonance apparatus manufactured by Bruker Corporation was used in Examples described below.).

The measurement mode is set to single pulse, and the pulse width is set to 45°. The number of points is set to 32 k, the observation range is set to 20 ppm (-6 to 14 ppm), the repeating time is set to 7 seconds, and the number of accumulation is set to 64. After 20 mg of a sample is dissolved in 0.6 ml of orthodichlorobenzene-d4, measurement is conducted at 120°C.

In a $^1$H-NMR spectrum, the number of double bonds calculated from the signal integral value derived from various double bonds (vinyl, vinylidene, and internal olefins) in 4.5 ppm to 5.8 ppm and the relative value of the total number of carbon atoms calculated from the total integral value of the total $^1$H signals are determined, and the number of various double bonds per 1000 polymer carbon atoms is calculated.

The ethylene-α-olefin copolymer (A) preferably has characteristics shown by the following (9).

(9) A plurality of peaks is present in a melting curve obtained by differential scanning calorimetry (DSC).

When there is a plurality of peaks, a large amount of low-melting point components is present and heat-sealability at low temperatures is excellent.

Differential scanning calorimetry (DSC) is conducted as follows using a differential scanning calorimeter (e.g., Diamond DSC manufactured by PerkinElmer Co., Ltd. was used in Examples described below.).

About 5 mg of a sample is packed into an aluminum pan, heated to 200°C at 10°C/min, held at 200°C for 10 minutes, then cooled to -30°C at 10°C/min, and then heated to 200°C at 10°C/min to obtain an endothermic curve. This endothermic curve having two or more peaks means that a plurality of peaks is present in the melting curve obtained by differential scanning calorimetry (DSC).

[Ethylene-α-olefin copolymer (B)]

The ethylene-α-olefin copolymer (B) is a copolymer of ethylene and one or more α-olefins having 4 to 10 carbon atoms, and preferably of ethylene and one or more α-olefins having 6 to 10 carbon atoms. Examples of the one or more α-olefins having 4 to 10 carbon atoms used for copolymerization with ethylene include 1-butene, 1-hexene, 4-methyl-1-pentene, 1-octene, and 1-decene.

The ethylene-α-olefin copolymer (B) has characteristics shown in the following (a) to (c).

(a) The density is in the range of 890 kg/m$^3$ or more and 930 kg/m$^3$ or less, preferably 900 kg/m$^3$ or more and 925 kg/m$^3$ or less, more preferably 905 kg/m$^3$ or more and 920 kg/m$^3$ or less.

When the density is equal to or larger than the lower limit, the surface of a film molded from the ethylene resin composition (Z) has little stickiness, and when the density is equal to or smaller than the upper limit, the impact strength of a film formed from the ethylene resin composition (Z) becomes favorable, and mechanical strength such as heat seal strength and bag breaking strength of a bag formed of the film is favorable.

(b) The melt flow rate (MFR) is in the range of 0.1 g/10 min or more and 10 g/10 min or less, preferably 0.5 g/10 min or more and 5.0 g/10 min or less, more preferably 0.8 g/10 min or more and 3.0 g/10 min or less.

When the melt flow rate (MFR) is equal to or more than the lower limit, a film formed from the ethylene resin composition has few fish eyes and has a favorable appearance. When the melt flow rate (MFR) is equal to or less than the upper limit, the ethylene resin composition (Z) has a high melt tension, and formability such as melt film stability becomes favorable.

(c) The intrinsic viscosity [[η] (dl/g)] measured in decalin at 135°C and the weight-average molecular weight (Mw) measured by GPC-viscometry (GPC-VISCO) satisfy the following equation (Eq-4):

$$1.90 \times 10^{-4} \times Mw^{0.776} \leq [\eta] \leq 2.80 \times 10^{-4} \times Mw^{0.776} \cdots \text{(Eq-4)},$$

and preferably satisfy the following equation (Eq-4') :

$$2.20 \times 10^{-4} \times Mw^{0.776} \leq [\eta] \leq 2.60 \times 10^{-4} \times Mw^{0.776} \cdots (Eq\text{-}4').$$

As described above, when long chain branching is absent in the ethylene polymer, the intrinsic viscosity [[η] (dl/g)] is known to increase relative to the molecular weight in comparison with ethylene polymer having long chain branching. Thus, the ethylene-α-olefin copolymer (B) of which [[η] (dl/g)] is equal to or more than the lower limit is a linear ethylene-α-olefin copolymer in which substantially no long chain branching is present. The ethylene resin composition (Z) of the present invention, containing such an ethylene-α-olefin copolymer, has a high melt tension and excels in bubble stability.

<Ethylene resin composition (Z)>

The ethylene resin composition (Z) according to the present invention includes the ethylene-α-olefin copolymer (A) and the ethylene-α-olefin copolymer (B).

Provided that the sum of the mass fraction ($W_A$) of the ethylene-α-olefin copolymer (A) and the mass fraction ($W_B$) of the ethylene-α-olefin copolymer (B) is 100% by mass, when $W_A$ is 1 to 50% by mass and $W_B$ is 50 to 99% by mass, the ethylene resin composition (Z) excels in formability and mechanical strength, and a film formed from the ethylene resin composition (Z) has very well-balanced transparency and blocking resistance.

When $W_A$ is more than 50% by mass and 99% by mass or less and $W_B$ is 1% by mass or more and less than 50% by mass, the ethylene resin composition (Z) excels in formability and mechanical strength and can be molded particularly at a lower resin pressure (or at a higher melt tension).

$W_A$ is preferably 5 to 40% by mass, more preferably 10 to 30% by mass. In the range, the ethylene resin composition (Z) excels in formability and mechanical strength, and a film formed from the ethylene resin composition (Z) has well-balanced transparency and blocking resistance.

The ethylene resin composition (Z) according to the present invention may be, but not limited to, one substantially consisting of the ethylene-α-olefin copolymer (A) and the ethylene-α-olefin copolymer (B), and may include a thermoplastic resin that is neither the ethylene-α-olefin copolymer (A) nor the ethylene-α-olefin copolymer (B) (hereinafter, referred to as "additional thermoplastic resin"), in addition to the ethylene-α-olefin copolymer (A) and the ethylene-α-olefin copolymer (B). The ethylene resin composition (Z) which is obtained as a thermoplastic resin composition by blending " additional thermoplastic resin" to the ethylene-α-olefin copolymer (A) and the ethylene-α-olefin copolymer (B) excels in formability and excels in mechanical strength.

The blend ratio of the sum of the ethylene-α-olefin copolymer (A) and the ethylene-α-olefin copolymer (B) to " additional thermoplastic resin" (total mass of ethylene-α-olefin copolymer (A) and ethylene-α-olefin copolymer (B)/mass of additional thermoplastic resin) is normally 99.9/0.1 to 0.1/99.9, preferably 90/10 to 10/90, and further preferably 70/30 to 30/70.

(Additional thermoplastic resin)

As the additional thermoplastic resin, crystalline thermoplastic resins such as polyolefin, polyamide, polyester, and polyacetal; and non-crystalline thermoplastic resins such as polystyrene, acrylonitrile-butadiene-styrene copolymer (ABS), polycarbonate, polyphenylene oxide, and polyacrylate are used. Polyvinyl chloride is also preferably used.

Specific examples of the above-described polyolefin include an ethylene polymer, a propylene polymer, a butene polymer, a 4-methyl-1-pentene polymer, a 3-methyl-1-butene polymer, and a hexene polymer. Of these, an ethylene polymer, a propylene polymer, and a 4-methyl-1-pentene polymer are preferred. The ethylene polymer may be a conventional ethylene polymer, or may be an ethylene-polar group-containing vinyl copolymer, and a conventional ethylene polymer is more preferred. The ethylene polymer and the propylene polymer may be an ethylene polymer and a propylene polymer each containing a biomass-derived monomer, respectively.

To the ethylene resin composition (Z) of the present invention, an additive such as a weather-resistant stabilizer, a heat-resistant stabilizer, an antistatic agent, a slip inhibitor, an anti-blocking agent, an anti-fogging agent, a lubricant, a pigment, a dye, a nucleating agent, a plasticizer, an anti-aging agent, a hydrochloric acid absorber, or antioxidant may be mixed as long as the object of the present invention is not impaired.

The total amount of the additive to be mixed is generally 10 parts by mass or less, preferably 1 part by mass or less, more preferably 0.5 parts by mass or less, per 100 parts by mass in total of the components other than the additive of the ethylene resin composition (Z).

<Method for producing ethylene-α-olefin copolymer>

Next, a method for producing the ethylene-α-olefin copolymer (A) will be described.

The ethylene-α-olefin copolymer (A) can be efficiently produced by polymerizing ethylene and one or more α-olefins having 4 to 10 carbon atoms in the presence of a catalyst for olefin polymerization (X) including the following components.

[Catalyst for olefin polymerization (X)]

The catalyst for olefin polymerization (X) includes a component (A) and a solid support (S) described below.

<Component (A)>

The component (A) is a transition metal compound represented by the following formula (1) (hereinafter, also referred to as the "transition metal compound (1)"). The catalyst for olefin polymerization (X) includes at least one transition metal compound (1). In other words, as the component (A), one transition metal compound (1) may be used or a plurality thereof may be used.

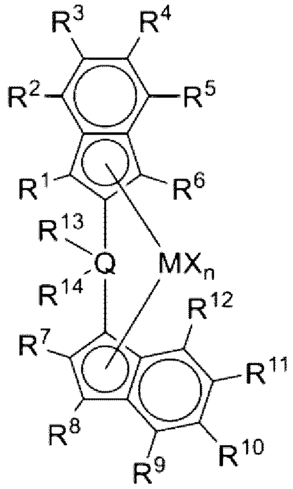

• • • (1)

In the formula (1), M is a zirconium atom or a hafnium atom, preferably a zirconium atom.

In the formula (1), n is an integer of 1 to 4 selected such that the transition metal compound (1) becomes electrically neutral, preferably 2.

In the formula (1), X's are each independently a hydrogen atom, a halogen atom, a hydrocarbon group having 1 to 20 carbon atoms, a silicon-containing group, an oxygen-containing group, a nitrogen-containing group, or a conjugated diene derivative group, preferably a halogen atom or a hydrocarbon group having 1 to 20 carbon atoms.

Examples of the halogen atom include fluorine, chlorine, bromine, and iodine, and chlorine is particularly preferred.

Examples of the hydrocarbon group having 1 to 20 carbon atoms include:

linear or branched alkyl groups, such as a methyl group, an ethyl group, a 1-propyl group, a 1-butyl group, a 1-pentyl group, a 1-hexyl group, a 1-heptyl group, a 1-octyl group, an iso-propyl group, a sec-butyl group (butan-2-yl group), a tert-butyl group (2-methylpropan-2-yl group), an iso-butyl group (2-methylpropyl group), a penetan-2-yl group, a 2-methylbutyl group, an iso-pentyl group (3-methylbutyl group), a neopentyl group (2,2-dimethylpropyl group), a siamyl group (1,2-dimethylpropyl group), an iso-hexyl group (4-methylpentyl group), a 2,2-dimethylbutyl group, a 2,3-dimethylbutyl group, a 3,3-dimethylbutyl group, a texyl group (2,3-dimethylbut-2-yl group), and a 4,4-dimethylpentyl group;

linear or branched alkenyl groups or unsaturated double bond-containing groups, such as a vinyl group, an allyl group, a propenyl group (prop-1-en-1-yl group), an isopropenyl group (prop-1-en-2-yl group), an allenyl group (prop-1,2-dien-1-yl group), a but-3-en-1-yl group, a crotyl group (but-2-en-1-yl group), a but-3-en-2-yl group, a methally group (2-methylallyl group), a but-1,3-dienyl group, a pent-4-en-1-yl group, a pent-3-en-1-yl group, a pent-2-en-1-yl group, an iso-pentenyl group (3-methylbut-3-en-1-yl group), a 2-methylbut-3-en-1-yl group, a pent-4-en-2-yl group,

and a prenyl group (3-methylbut-2-en-1-yl group);
linear or branched alkynyl groups or unsaturated triple bond-containing groups, such as an ethynyl group, a prop-2-yn-1-yl group, and a propargyl group (prop-1-yn-1-yl group);
linear or branched alkyl groups and unsaturated double bond-containing groups, those groups containing an aromatic group, such as a benzyl group, a 2-methylbenzyl group, a 4-methylbenzyl group, a 2,4,6-trimethylbenzyl group, a 3,5-dimethylbenzyl group, a cuminyl group (4-iso-propylbenzyl group), a 2,4,6-tri-iso-propylbenzyl group, a 4-tert-butylbenzyl group, a 3,5-di-tert-butylbenzyl group, a 1-phenylethyl group, and a benzhydryl group (diphenylmethyl group);
cyclic saturated hydrocarbon groups, such as a cyclopropyl group, a cyclobutyl group, a cyclopentyl group, a cyclohexyl group, a cycloheptyl group, a cycloheptatrienyl group, a norbornyl group, a norbornenyl group, a 1-adamantyl group, and a 2-adamantyl group; and
aromatic substituents, such as a phenyl group, a tolyl group (methylphenyl group), a xylyl group (dimethylphenyl group), a mesityl group (2,4,6-trimethylphenyl group), a cumenyl group (iso-propylphenyl group), a duryl group (2,3,5,6-tetramethylphenyl group), a 2,6-di-iso-propylphenyl group, a 2,4,6-tri-iso-propylphenyl group, a 4-tert-butylphenyl group, a 3,5-di-tert-butylphenyl group, a naphthyl group, a biphenyl group, a ter-phenyl group, a binaphthyl group, an acenaphthalenyl group, a phenanthryl, group, an anthracenyl group, a pyrenyl group, and a ferrocenyl group;

and preferably a methyl group, an iso-butyl group, a neopentyl group, a siamyl group, a benzyl group, a phenyl group, a tolyl group, a xylyl group, a mesityl group, and a cumenyl group.

The hydrocarbon group having 1 to 20 carbon atoms may be a halogen-substituted hydrocarbon group in which a part or all of the hydrogen atoms of the hydrocarbon group having 1 to 20 carbon atoms are each substituted with a halogen atom; examples thereof include a fluoromethyl group, a trifluoromethyl group, a trichloromethyl group, a 2,2,2-trifluoroethyl group, a pentafluoroethyl group, a pentachloroethyl group, a pentafluorophenylmethyl group, a fluorophenyl group, a difluorophenyl group, a trifluorophenyl group, a tetrafluorophenyl group, a pentafluorophenyl group, a trifluoromethylphenyl group, and bistrifluoromethylphenyl group, and preferably a pentafluorophenyl group.

Examples of the silicon-containing group include a trimethylsilyl group, a triethylsilyl group, a tri-iso-propylsilyl group, a diphenylmethylsilyl group, a tertbutyldimethylsilyl group, a tert-butyldiphenylsilyl group, a triphenylsilyl group, a tris(trimethylsilyl)silyl group, and a trimethylsilylmethyl group, and preferably a trimethylsilylmethyl group.

Examples of the oxygen-containing group include a methoxy group, an ethoxy group, a n-propoxy group, an iso-propoxy group, an allyloxy group, a n-butoxy group, a sec-butoxy group, an iso-butoxy group, a tert-butoxy group, a benzyloxy group, a methoxymethoxy group, a phenoxy group, a 2,6-dimethylphenoxy group, a 2,6-di-iso-propylphenoxy group, a 2,6-di-tert-butylphenoxy group, a 2,4,6-trimethylphenoxy group, a 2,4,6-tri-iso-propylphenoxy group, an acetoxy group, a pivaloyloxy group, a benzoyloxy group, a trifluoroacetoxy group, a perchlorate anion, and a periodate anion, preferably a methoxy group, an ethoxy group, an iso-propoxy group, and a tert-butoxy group.

Examples of the nitrogen-containing group include an amino group, a cyano group, a methylamino group, a dimethylamino group, an ethylamino group, a diethylamino group, an allylamino group, a diallylamino group, a benzylamino group, a dibenzylamino group, a pyrrolidinyl group, a piperidinyl group, a morpholyl group, a pyrrolyl group, and a bistriflylimide group.

Examples of the conjugated diene derivative group include a 1,3-butadienyl group, an isoprenyl group (2-methyl-1,3-butadienyl group), a piperylenyl group (1,3-pentadienyl group), a 2,4-hexadienyl group, a 1,4-diphenyl-1,3-pentadienyl group, and a cyclopentadienyl group, and preferably a 1,3-butadienyl group and a 1,3-pentadienyl group.

In the formula (1), Q is a carbon atom or a silicon atom, preferably a silicon atom.

In the formula (1), $R^1$ to $R^{14}$ are each independently a hydrogen atom, a hydrocarbon group having 1 to 20 carbon atoms, a silicon-containing group having 1 to 20 carbon atoms, an oxygen-containing group having 1 to 20 carbon atoms, or a nitrogen-containing group having 1 to 20 carbon atoms, and preferably a hydrogen atom, a hydrocarbon group having 1 to 20 carbon atoms, or an oxygen-containing group having 1 to 20 carbon atoms.

Examples of hydrocarbon group having 1 to 20 carbon atoms as $R^1$ to $R^{14}$ include linear or branched alkyl groups, such as a methyl group, an ethyl group, a 1-propyl group, a 1-butyl group, a 1-pentyl group, a 1-hexyl group, a 1-heptyl group, a 1-octyl group, an iso-propyl group, a sec-butyl group (butan-2-yl group), a tert-butyl group (2-methylpropan-2-yl group), an iso-butyl group (2-methylpropyl group), a penetan-2-yl group, a 2-methylbutyl group, an iso-pentyl group (3-methylbutyl group), a neopentyl group (2,2-dimethylpropyl group), a siamyl group (1,2-dimethylpropyl group), an iso-hexyl group (4-methylpentyl group), a 2,2-dimethylbutyl group, a 2,3-dimethylbutyl group, a 3,3-dimethylbutyl group, a texyl group (2,3-dimethylbut-2-yl group), and a 4,4-dimethylpentyl group;

linear or branched alkenyl groups or unsaturated double bond-containing groups, such as a vinyl group, an allyl group, a propenyl group (prop-1-en-1-yl group), an isopropenyl group (prop-1-en-2-yl group), an allenyl group (prop-1,2-dien-1-yl group), a but-3-en-1-yl group, a crotyl group (but-2-en-1-yl group), a but-3-en-2-yl group, a methally

group (2-methylallyl group), a but-1,3-dienyl group, a pent-4-en-1-yl group, a pent-3-en-1-yl group, a pent-2-en-1-yl group, an iso-pentenyl group (3-methylbut-3-en-1-yl group), a 2-methylbut-3-en-1-yl group, a pent-4-en-2-yl group, and a prenyl group (3-methylbut-2-en-1-yl group);

linear or branched alkynyl groups or unsaturated triple bond-containing groups, such as an ethynyl group, a prop-2-yn-1-yl group, and a propargyl group (prop-1-yn-1-yl group);

linear or branched alkyl groups and unsaturated double bond-containing groups, those containing an aromatic group, such as a benzyl group, a 2-methylbenzyl group, a 4-methylbenzyl group, a 2,4,6-trimethylbenzyl group, a 3,5-dimethylbenzyl group, a cuminyl group (4-iso-propylbenzyl group), a 2,4,6-tri-iso-propylbenzyl group, a 4-tert-butylbenzyl group, a 3,5-di-tert-butylbenzyl group, a 1-phenylethyl group, a benzhydryl group (diphenylmethyl group), and a pentafluorophenylmethyl group;

cyclic saturated hydrocarbon groups, such as a cyclopropyl group, a cyclobutyl group, a cyclopentyl group, a cyclohexyl group, a cycloheptyl group, a cycloheptatrienyl group, a norbornyl group, a norbornenyl group, a 1-adamantyl group, and a 2-adamantyl group; and

aromatic substituents, such as a phenyl group, a tolyl group (methylphenyl group), a xylyl group (dimethylphenyl group), a mesityl group (2,4,6-trimethylphenyl group), a cumenyl group (iso-propylphenyl group), a duryl group (2,3,5,6-tetramethylphenyl group), a 2,6-di-iso-propylphenyl group, a 2,4,6-tri-iso-propylphenyl group, a 4-tert-butylphenyl group, a 3,5-di-tert-butylphenyl group, a naphthyl group, a biphenyl group, a ter-phenyl group, a binaphthyl group, an acenaphthalenyl group, a phenanthryl group, an anthracenyl group, a pyrenyl group, and a ferrocenyl group;

halogen-substituted hydrocarbon groups in which a part or all of the hydrogen atoms of the hydrocarbon group having 1 to 20 carbon atoms are each substituted with a halogen atom, such as a fluoromethyl group, a trifluoromethyl group, a trichloromethyl group, a 2,2,2-trifluoroethyl group, a pentafluoroethyl group, a pentachloroethyl group, a pentafluorophenylmethyl group, a fluorophenyl group, a difluorophenyl group, a trifluorophenyl group, a tetrafluorophenyl group, a pentafluorophenyl group, a trifluoromethylphenyl group, and bistrifluoromethylphenyl group;

and preferably a methyl group, an ethyl group, a 1-propyl group, a 1-butyl group, a 1-pentyl group, a 1-hexyl group, a 1-heptyl group, a 1-octyl group, an iso-propyl group, a sec-butyl group, a tert-butyl group, an iso-butyl group, an iso-pentyl group, a neopentyl group, a tert-pentyl group, an allyl group, a cyclopropyl group, a cyclobutyl group, a cyclopentyl group, a cyclohexyl group, a cycloheptyl group, a cyclooctyl group, a cyclooctenyl group, a norbornyl group, a bicyclo[2.2.2]octan-1-yl group, a 1-adamantyl group, a 2-adamantyl group, a benzyl group, a benzhydryl group, a cumyl group, a 1,1-diphenylethyl group, a trityl group, a 2-phenylethyl group, a 3-phenylpropyl group, a cinnamyl group, a phenyl group, a tolyl group, a xylyl group, a mesityl group, a cumenyl group, a 2,6-di-iso-propylphenyl group, a 2,4,6-tri-iso-propylphenyl group, a 4-tert-butylphenyl group, a 3,5-di-tert-butylphenyl group, a 4-adamantylphenyl group, a naphthyl group, a biphenyl group, a tert-phenyl group, a binaphthyl group, a phenanthryl group, an anthracenyl group, a ferrocenyl group, and a pentafluorophenyl group.

Examples of the silicon-containing group having 1 to 20 carbon atoms as $R^1$ to $R^{14}$ preferably include a trimethylsilyl group, a triethylsilyl group, a tri-iso-propylsilyl group, a tert-butyl dimethylsilyl group, a triphenylsilyl group, a cyclopentadienyldimethylsilyl group, a cyclopentadienyldiphenylsilyl group, an indenyldimethylsilyl group, a fluorenyldimethylsilyl group, a 4-trimethylsilylphenyl group, a 4-triethylsilylphenyl group, a 4-tri-iso-propylsilylphenyl group, or a 3,5-bis(trimethylsilyl)phenyl group, for example, and examples thereof include a trimethylsilyl group, a triethylsilyl group, a tert-butyl dimethylsilyl group, a 4-trimethylsilylphenyl group, a 4-triethylsilylphenyl group, a 4-tri-iso-propylsilylphenyl group, and a 3,5-bis(trimethylsilyl)phenyl group.

Examples of the oxygen-containing group having 1 to 20 carbon atoms as $R^1$ to $R^{14}$ include a methoxy group, an ethoxy group, an iso-propoxy group, an allyloxy group, a n-butoxy group, a tert-butoxy group, a prenyloxy group, a benzyloxy group, a phenoxy group, a naphthoxy group, a tolyloxy group, an iso-propylphenoxy group, an allylphenoxy group, a tert-butylphenoxy group, a methoxyphenoxy group, a biphenyloxy group, a binaphthyloxy group, an allyloxymethyl group, a benzyloxymethyl group, a phenoxymethyl group, a methoxyethyl group, a methoxyallyl group, a benzyloxyallyl group, a phenoxyallyl group, a dimethoxymethyl group, a dioxolanyl group, a tetramethyldioxolanyl group, a dioxanyl group, a dimethyldioxanyl group, a methoxyphenyl group, an iso-propoxyphenyl group, an allyloxyphenyl group, a phenoxyphenyl group, a methylenedioxyphenyl group, a 3,5-dimethyl-4-methoxyphenyl group, a 3,5-di-tert-butyl-4-methoxyphenyl group, a furyl group, a methylfuryl group, a tetrahydropyranyl group, a furfuryl group, a benzofuryl group, and dibenzofuryl group, and preferably a methoxy group, an iso-propoxy group, a tert-butoxy group, an allyloxy group, a phenoxy group, a dimethoxymethyl group, a dioxolanyl group, a methoxyphenyl group, an iso-propoxyphenyl group, an allyloxyphenyl group, a phenoxyphenyl group, a 3,5-dimethyl-4-methoxyphenyl group, a 3,5-di-tert-butyl-4-methoxyphenyl group, a furyl group, a methylfuryl group, a benzofuryl group, and a dibenzofuryl group.

Examples of the nitrogen-containing group having 1 to 20 carbon atoms as $R^1$ to $R^{14}$ include an amino group, a dimethylamino group, a diethylamino group, an allylamino group, a benzylamino group, a dibenzylamino group, a pyrrolidinyl group, a piperidinyl group, a morpholyl group, a dimethylaminomethyl group, a benzylaminomethyl group, a pyrrolidinylmethyl group, a dimethylaminoethyl group, a pyrrolidinylethyl group, a dimethylaminopropyl group, a pyrrolidinylpropyl group, a dimethylaminoallyl group, a pyrrolidinylallyl group, an aminophenyl group, a dimethylaminophenyl group, a 3,5-dimethyl-4-dimethylaminophenyl group, a 3,5-di-iso-propyl-4-dimethylaminophenyl group, a julolidinyl group, a tetramethyljulolidinyl group, a pyrrolidinylphenyl group, a pyrrolylphenyl group, a carbazolylphenyl group, a di-tert-butyl carbazolylphenyl group, a pyrrolyl group, a pyridyl group, a quinolyl group, a tetrahydroquinolyl group, an iso-quinolyl group, a tetrahydro-iso-quinolyl group, an indolyl group, an indolinyl group, a carbazolyl group, a di-tert-butyl carbazolyl group, an imidazolyl group, a dimethylimidazolidinyl group, a benzoimidazolyl group, an oxazolyl group, an oxazolidinyl group, and a benzoxazolyl group, and preferably an amino group, a dimethylamino group, a diethylamino group, a pyrrolidinyl group, a dimethylaminophenyl group, a 3,5-dimethyl-4-dimethylaminophenyl group, a 3,5-di-iso-propyl-4-dimethylaminophenyl group, a julolidinyl group, a tetramethyljulolidinyl group, a pyrrolidinylphenyl group, a pyrrolyl group, a pyridyl group, a carbazolyl group, and an imidazolyl group.

In the formula (1), adjacent substituents among $R^1$ to $R^6$ (e.g., $R^1$ and $R^2$, $R^2$ and $R^3$, $R^3$ and $R^4$, $R^4$ and $R^5$, and $R^5$ and $R^6$) may be bonded to each other to form a ring that may have a substituent. The ring to be formed in this case is preferably a 5 to 8-membered ring that condensates to the indenyl ring moiety, may have a substituent, and consists of a saturated hydrocarbon (excluding hydrocarbon of the indenyl ring moiety) or an unsaturated hydrocarbon. When a plurality of rings is present, the rings are the same as or different from one another. Not particularly limited as long as the effects of the present invention are achieved, the ring is more preferably a 5- or 6-membered ring; in this case, examples of a structure in which the ring is combined with the indenyl ring moiety as the scaffold include a benzoindenyl ring, a tetrahydroindacene ring, and a cyclopentatetrahydroraphthalene ring, and preferably a benzoindenyl ring and a tetrahydroindacene ring. These rings may have a substituent.

In the formula (1), adjacent substituents among $R^7$ to $R^{12}$ (e.g., $R^7$ and $R^8$, $R^8$ and $R^9$, $R^9$ and $R^{10}$, $R^{10}$ and $R^{11}$, and $R^{11}$ and $R^{12}$) may be bonded to each other to form a ring that may have a substituent. The ring to be formed in this case is preferably a 5 to 8-membered ring that condensates to the indenyl ring moiety, that may have a substituent and that consists of a saturated hydrocarbon (excluding hydrocarbon of the indenyl ring moiety) or an unsaturated hydrocarbon. When a plurality of rings is present, the rings are the same as or different from one another. Not particularly limited as long as the effects of the present invention are achieved, the ring is more preferably a 5- or 6-membered ring; in this case, examples of a structure in which the ring is combined with the indenyl ring moiety as a scaffold include a benzoindenyl ring, a tetrahydroindacene ring, a cyclopentatetrahydroraphthalene ring, a tetrahydrofluorene ring, and a fluorene ring, and preferably a benzoindenyl ring and a tetrahydroindacene ring. These ring may have a substituent.

In the formula (1), $R^{13}$ and $R^{14}$ may be bonded to each other to form a ring including Q, and these rings may have a substituent. The ring formed in this case preferably form a 3 to 8-membered ring saturated or unsaturated ring that may have a substituent. Not particularly limited as long as the effects of the present invention are achieved, the ring is preferably a 4 to 6-membered ring. In this case, examples of the structure combined with Q include a cyclobutane ring, a cyclopentane ring, a fluorene ring, a silacyclobutane (siletane) ring, a silacyclopentane (silolane) ring, a silacyclohexane (silinane) ring, and a silafluorene ring, and preferably a cyclopentane ring, a silacyclobutane ring, and a silacyclopentane ring. These ring may have a substituent.

Specific examples of the transition metal compound (1) will be shown below, but the scope of the present invention is not particularly limited by the examples.

For convenience, the ligand structure excluding the moiety represented by MXn (metal moiety) of the transition metal compound (1) is divided into seven: a 2-indenyl ring moiety, a 1-indenyl ring moiety, indenyl ring moiety's $R^1$, $R^6$, and $R^8$ substituents, indenyl ring moiety's $R^2$, $R^5$, $R^9$, and $R^{12}$ substituents, indenyl ring moiety's $R^3$, $R^4$, $R^{10}$, and $R^{11}$ substituents, a 1-indenyl ring moiety's $R^7$ substituent, and a crosslinking moiety. The 2-indenyl ring moiety is abbreviated as $\alpha$, the 1-indenyl ring moiety is abbreviated as $\beta$, the indenyl ring moiety's $R^1$, $R^6$, and $R^8$ substituents are abbreviated as $\gamma$, the indenyl ring moiety's $R^2$, $R^5$, $R^9$, and $R^{12}$ substituent are abbreviated as $\delta$, the indenyl ring moiety's $R^3$, $R^4$, $R^{10}$, and $R^{11}$ substituents are abbreviated as s, the 1-indenyl ring moiety's $R^7$ substituent is abbreviated as $\zeta$, and the crosslinking moiety is abbreviated as $\eta$, and abbreviations of the substituents are shown in [Table 1] to [Table 7].

[Table 1]

| 2-Indenyl ring moiety | |
|---|---|
| 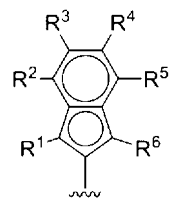 | $\alpha$-1 |

(continued)

| 2-Indenyl ring moiety | |
|---|---|
| 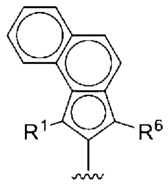 | $\alpha$-2 |
| 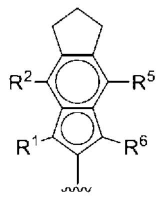 | $\alpha$-3 |
| 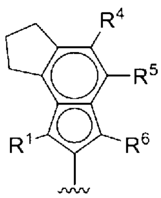 | $\alpha$-4 |
| 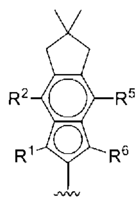 | $\alpha$-5 |
| 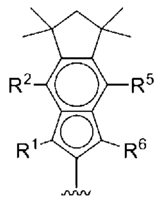 | $\alpha$-6 |
| 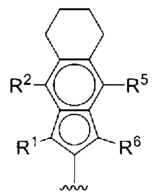 | $\alpha$-7 |
| 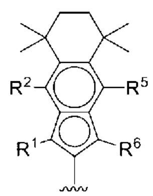 | $\alpha$-8 |

[Table 2]

| 1-Indenyl ring moiety | |
|---|---|
| 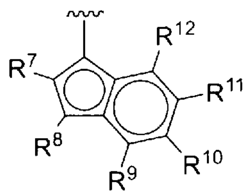 | β-1 |
| 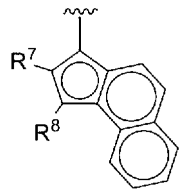 | β-2 |
| 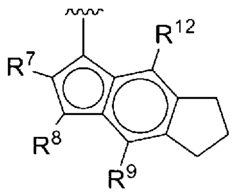 | β-3 |
| 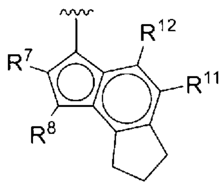 | β-4 |
| 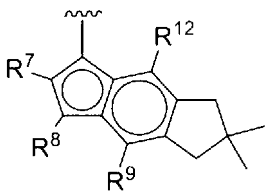 | β-5 |
| 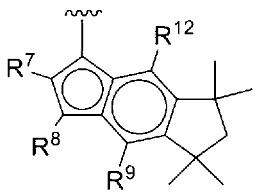 | β-6 |
| 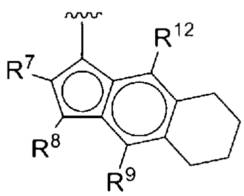 | β-7 |
| 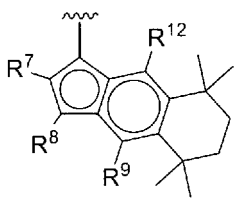 | β-8 |

Wavy lines in the [Table 1] to [Table 2] each represent a site binding to the crosslinking moiety.

[Table 3]

| Indenyl ring's R1, R6, and R8 substituents | |
|---|---|
| γ-1 | Hydrogen |
| γ-2 | Methyl |
| γ-3 | Ethyl |
| γ-4 | n-Propyl |
| γ-5 | Allyl |
| γ-6 | n-Butyl |
| γ-7 | But-3-en-1-yl |
| γ-8 | Benzyl |
| γ-9 | Pentafluorophenylmethyl |
| γ-10 | Phenyl |
| γ-11 | Tolyl |
| γ-12 | Naphthyl |
| γ-13 | 4-tert-Butylphenyl |
| γ-14 | 5-Methyl-2-furyl |
| γ-15 | 5-Methyl-2-thienyl |

The $R^1$, $R^6$, and $R^8$ substituents in the [Table 3] may be the same as or different from one another in the combination.

[Table 4]

| Indenyl ring's R2, R5, R9, and R12 substituents | | | | |
|---|---|---|---|---|
| δ-1 | Hydrogen | | δ-30 | Anthracenyl |
| δ-2 | Methyl | | δ-31 | Phenanthryl |
| δ-3 | Methoxy | | δ-32 | 4-iso-Propylphenyl |
| δ-4 | Ethyl | | δ-33 | 4-tert-Butylphenyl |
| δ-5 | Ethoxy | | δ-34 | 4-Texylphenyl |
| δ-6 | n-Propyl | | δ-35 | 4-tert-Octylphenyl |
| δ-7 | iso-Propyl | | δ-36 | 3,5-Di-tert-butylphenyl |
| δ-8 | Allyl | | δ-37 | 4-(1-Adamantyl)phenyl |
| δ-9 | iso-Propoxy | | δ-38 | 4-Trimethylsilylphenyl |
| δ-10 | n-Butyl | | δ-39 | 3,5-Bis(trimethylsilyl)phenyl |
| δ-11 | iso-Butyl | | δ-40 | 3,5-Di-tert-butyl-4-methoxyphenyl |
| δ-12 | sec-Butyl | | δ-41 | 3,5-Di-iso-propyl-4-dimethylaminophenyl |
| δ-13 | tert-Butyl | | δ-42 | Julolidinyl |
| δ-14 | But-3-en-1-yl | | δ-43 | Tetramethyljulolidinyl |
| δ-15 | Neopentyl | | δ-44 | 2-Furyl |
| δ-16 | Cyclopentyl | | δ-45 | 5-Methyl-2-furyl |
| δ-17 | Cyclohexyl | | δ-46 | 2-Benzofuryl |
| δ-18 | 2,4-Dimethylpentan-2-yl | | δ-47 | 2-Thienyl |
| δ-19 | 2,4,4-Trimethylpentan-2-yl | | δ-48 | 5-Methyl-2-thienyl |
| δ-20 | Benzyl | | δ-49 | 2-Benzothienyl |
| δ-21 | Pentafluorophenylmethyl | | δ-50 | N-Pyrrolidinyl |
| δ-22 | Phenyl | | δ-51 | N-Pyrrolyl |
| δ-23 | Phenoxy | | δ-52 | N-Indolyl |
| δ-24 | Tolyl | | δ-53 | N-Carbazolyl |
| δ-25 | Xylyl | | δ-54 | 3,6-Di-tert-butyl-carbazolyl |
| δ-26 | Mesityl | | | |
| δ-27 | Anisyl | | | |
| δ-28 | Naphthyl | | | |
| δ-29 | Biphenyl | | | |

The $R^2$, $R^5$, $R^9$, and $R^{12}$ substituents in the [Table 4] may be the same as or different from one another in the combination.

[Table 5]

| Indenyl ring's R3, R4, R10, and R11 substituents | |
|---|---|
| ε-1 | Hydrogen |
| ε-2 | Methyl |
| ε-3 | Methoxy |
| ε-4 | Ethyl |

(continued)

| Indenyl ring's R3, R4, R10, and R11 substituents | |
|---|---|
| ε-5 | Ethoxy |
| ε-6 | n-Propyl |
| ε-7 | iso-Propyl |
| ε-8 | iso-Propoxy |
| ε-9 | n-Butyl |
| ε-10 | iso-Butyl |
| ε-11 | sec-Butyl |
| ε-12 | tert-Butyl |
| ε-13 | Neopentyl |
| ε-14 | Cyclopentyl |
| ε-15 | Cyclohexyl |
| ε-16 | Texyl |
| ε-17 | tert-Octyl |
| ε-18 | Phenoxy |

The $R^3$, $R^4$, $R^{10}$, and $R^{11}$ substituents in the [Table 5] may be the same as or different from one another in the combination.

[Table 6]

| 1-Indenyl ring's R7 substituent | |
|---|---|
| ζ-1 | Hydrogen |
| ζ-2 | Methyl |
| ζ-3 | Ethyl |
| ζ-4 | n-Propyl |
| ζ-5 | iso-propyl |
| ζ-6 | Allyl |
| ζ-7 | Crotyl |
| ζ-8 | Methallyl |
| ζ-9 | n-Butyl |
| ζ-10 | iso-Butyl |
| ζ-11 | But-3-en-1-yl |
| ζ-12 | Neopentyl |
| ζ-13 | Cyclohexylmethyl |
| ζ-14 | 1-Adamantylmethyl |
| ζ-15 | Benzyl |
| ζ-16 | Trimethylsilylmethyl |
| ζ-17 | Phenyl |
| ζ-18 | Tolyl |

(continued)

| 1-Indenyl ring's R7 substituent | |
|---|---|
| ζ-19 | Naphthyl |
| ζ-20 | Anisyl |
| ζ-21 | 4-tert-Butylphenyl |
| ζ-22 | 4-Trimethylsilylphenyl |
| ζ-23 | 3,5-Di-tert-butylphenyl |
| ζ-24 | 3,5-Bis(trimethylsilyl)phenyl |
| ζ-25 | 3,5-Di-tert-butyl-4-methoxyphenyl |
| ζ-26 | 3,5-Di-iso-propyl-4-dimethylaminophenyl |
| ζ-27 | Julolidinyl |
| ζ-28 | Tetramethyljulolidinyl |
| ζ-29 | 2-Furyl |
| ζ-30 | 5-Methyl-2-furyl |
| ζ-31 | 2-Thienyl |
| ζ-32 | 5-Methyl-2-thienyl |
| ζ-33 | N-Pyrrolidinyl |
| ζ-34 | N-Piperidinyl |
| ζ-35 | N-Morpholinyl |
| ζ-36 | N-Methyl-piperazinyl |
| ζ-37 | N-Pyrrolyl |
| ζ-38 | N-Indolyl |
| ζ-39 | N-Carbazolyl |

[Table 7]

[Table 7]

| Crosslinking moiety | |
|---|---|
| η-1 | Methylene |
| η-2 | 1,1-Ethylene |
| η-3 | Benzyl (Phenylmethylene) |
| η-4 | Dimethylmethylene (Isopropylidene) |
| η-5 | Methylethylmethylene (sec-Butylidene) |
| η-6 | Diethylmethylene (3-Pentylidene) |
| η-7 | Di-n-propylmethylene (4-Heptylidene) |
| η-8 | Di-n-butylmethylene (5-Nonylidene) |
| η-9 | Dibenzylmethylene |
| η-10 | (Methyl)(phenyl)methylene (1-Phenethylidene) |
| η-11 | (Methyl)(4-methylphenyl)methylene |

(continued)

| Crosslinking moiety | |
|---|---|
| η-12 | (Methyl)(4-methoxyphenyl)methylene |
| η-13 | Diphenylmethylene |
| η-14 | Di(4-methylphenyl)methylene |
| η-15 | Di(4-methoxyphenyl)methylene |
| η-16 | Di(4-dimethylaminophenyl)methylene |
| η-17 | 1,1-Cyclobutylene |
| η-18 | 1,1-Cyclopentylene |
| η-19 | 1,1-Cyclohexylene |
| η-20 | Dimethylsilylene |
| η-21 | Diethylsilylene |
| η-22 | Divinylsilylene |
| η-23 | Di-n-propylsilylene |
| η-24 | Di-iso-propylsilylene |
| η-25 | Diallylsilylene |
| η-26 | Di-n-butylsilylene |
| η-27 | Di-tert-butylsilylene |
| η-28 | Di-n-hexylsilylene |
| η-29 | Diphenylsilylene |
| η-30 | Di(4-methylphenyl)silylene |
| η-31 | 1,1-Silacyclobutylene (Trimethylenesilylene) |
| η-32 | 1,1-Silacyclopentylene (Tetramethylenesilylene) |
| η-33 | 1,1-Silacyclohexylene (Pentamethylenesilylene) |
| η-34 | (Methyl)(ethyl)silylene |
| η-35 | (Methyl)(vinyl)silylene |
| η-36 | (Methyl)(allyl)silylene |
| η-37 | (Methyl)(n-hexyl)silylene |
| η-38 | (Methyl)(n-octyl)silylene |
| η-39 | (Methyl)(n-decyl)silylene |
| η-40 | (Methyl)(cyclohexyl)silylene |
| η-41 | (Methyl)(phenyl)silylene |

Specific examples of the metal moiety MXn include:

$ZrF_2$, $ZrCl_2$, $ZrBr_2$, $ZrI_2$, $Zr(Me)_2$, $Zr(Bn)_2$, $Zr(Allyl)_2$, $Zr(CH_2\text{-}tBu)_2$, Zr(1,3-butadienyl), Zr(1,3-pentadienyl), Zr(2,4-hexadienyl), Zr(1,4-diphenyl-1,3-pentadienyl), $Zr(CH_2\text{-}Si(Me)_3)_2$, $Zr(OMe)_2$, $Zr(OiPr)_2$, $Zr(NMe_2)_2$, $Zr(OMs)_2$, $Zr(OTs)_2$, $Zr(OTf)_2$,
$HfF_2$, $HfCl_2$, $HfBr_2$, $HfI_2$, $Hf(Me)_2$, $Hf(Bn)_2$, $Hf(Allyl)_2$, $Hf(CH_2\text{-}tBu)_2$, Hf(1,3-butadienyl), Hf(1,3-pentadienyl), Hf(2,4-hexadienyl), Hf(1,4-diphenyl-1,3-pentadienyl), $Hf(CH_2\text{-}Si(Me)_3)_2$, $Hf(OMe)_2$, $Hf(OiPr)_2$, $Hf(NMe_2)_2$, $Hf(OMs)_2$, $Hf(OTs)_2$, and $Hf(OTf)_2$.

Me is a methyl group, Bn is a benzyl group, tBu is a tert-butyl group, $Si(Me)_3$ is a trimethylsilyl group, OMe is a methoxy

group, OiPr is an iso-propoxy group, $NMe_2$ is a dimethylamino group, OMs is a methanesulfonate group, OTs is a p-toluenesulfonate group, and OTf is a trifluoromethanesulfonate group.

In accordance with the above notation, a compound represented by the following formula [6] is exemplified when the 2-indenyl ring moiety is α-1 in [Table 1], the 1-indenyl ring moiety is β-5 in [Table 2], all the indenyl ring moiety's $R^1$, $R^6$, and $R^8$ substituent are γ-1 in [Table 3], both the 2-indenyl ring moiety's $R^2$ and $R^3$ substituents are δ-1 in [Table 4], both the 2-indenyl ring moiety's $R^3$ and $R^4$ substituents are ε-1 in [Table 5], the 1-indenyl ring moiety's $R^7$ substituent is ζ-30 in [Table 6], the 1-indenyl ring moiety's $R^9$ substituent is δ-38 in [Table 4], the 1-indenyl ring moiety's $R^{12}$ substituent is δ-3 in [Table 4], and the crosslinking moiety is η-20 in [Table 7] in combination and the metal moiety MXn is $ZrCl_2$.

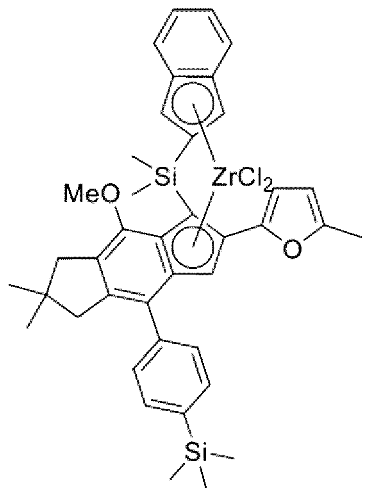

・・・[6]

A compound represented by the following formula [7] is exemplified when the 2-indenyl ring moiety is α-1 in [Table 1], the 1-indenyl ring moiety is β-2 in [Table 2], all the indenyl ring moiety's $R^1$, $R^6$, and $R^8$ substituents are γ-1 in [Table 3], both the 2-indenyl ring moiety's $R^2$ and $R^5$ substituents are δ-2 in [Table 4], both the 2-indenyl ring moiety's $R^3$ and $R^4$ substituents are ε-1 in [Table 5], the 1-indenyl ring moiety's $R^7$ substituent is ζ-1 in [Table 6], and the crosslinking moiety is η-4 in [Table 7] in combination, and the metal moiety MXn is $Zr(NMe_2)_2$.

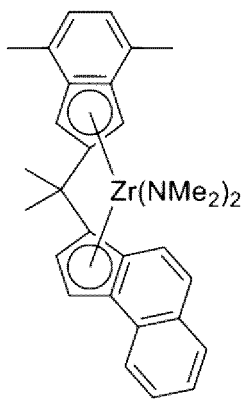

・・・[7]

A compound represented by the following formula [8] is exemplified when the 2-indenyl ring moiety is α-3 in [Table 1], the 1-indenyl ring moiety is β-1 in [Table 2], both the 2-indenyl ring moiety's $R^1$ and $R^6$ substituents are γ-2 in [Table 3], all the indenyl ring moiety's $R^2$, $R^5$, and $R^{12}$ substituents are δ-1 in [Table 4], the 1-indenyl ring moiety's $R^7$ substituent is ζ-12 in [Table 6], the 1-indenyl ring moiety's $R^8$ substituent is γ-1 in [Table 3], the 1-indenyl ring moiety's $R^9$ substituent is δ-42 in [Table 4], the 1-indenyl ring moiety's $R^{10}$ substituent is ε-3 in [Table 5], the 1-indenyl ring moiety's $R^{11}$ substituent is ε-12 in [Table 5], and the crosslinking moiety is η-31 in [Table 7] in combination, and the metal moiety MXn is $HfMe_2$, a compound represented by the following formula [8] is exemplified.

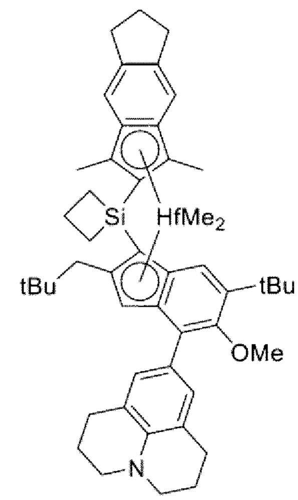

・・・ [8]

A compound represented by the following formula [9] is exemplified when the 2-indenyl ring moiety is α-1 in [Table 1], the 1-indenyl ring moiety is β-1 in [Table 2], both the 2-indenyl ring moiety's $R^1$ and $R^6$ substituents are γ-1 in [Table 3], the 2-indenyl ring moiety's $R^2$ substituent is δ-7 in [Table 4], all the 2-indenyl ring moiety's $R^3$, $R^4$, $R^{10}$, and $R^{11}$ substituents are ε-1 in [Table 5], the 2-indenyl ring moiety's $R^5$ substituent is δ-2 in [Table 4], the 1-indenyl ring moiety's $R^7$ substituent is ζ-1 in [Table 6], the 1-indenyl ring moiety's $R^8$ substituent is γ-9 in [Table 3], both the 1-indenyl ring moiety's $R^9$ and $R^{12}$ substituents are δ-1 in [Table 4], and the crosslinking moiety is η-29 in [Table 7] in combination, and the metal moiety MXn is Zr(1,3-pentadienyl), a compound represented by the following formula [9] is exemplified.

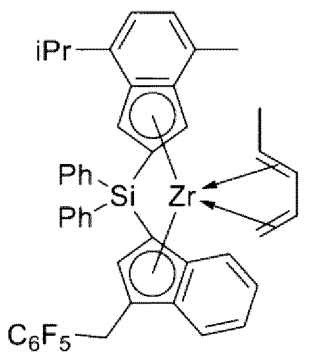

・・・ [9]

The transition metal compound (1) can be produced by a conventionally known method, and the production method therefor is not particularly limited.

A substituted indene compound as the starting material can be produced by a known method, and the production method therefor is not particularly limited. Examples of the known production method include production methods disclosed in "Organometallics 1994, 13, 954.", "Organometallics 2006, 25, 1217.", patent literature JP 2006-509059A, "Bioorg. Med. Chem. 2008,16,7399.", patent literature WO 2009/080216, "Organometallics 2011, 30, 5744.", patent literature JP 2011-500800A, "Organometallics 2012, 31, 4962.", "Chem. Eur. J. 2012, 18, 4174.", patent literature JP 2012-012307A, JP 2012-121882A, JP 2014-196319A, JP 2014-513735A, JP 2015-063495A, JP 2016-501952A, and JP 2019-059933A, for example.

Examples of a known production method for the transition metal compound (1) and a precursor compound (ligand) include "Macromolecules 2001, 34, 2072.", "Macromolecules 2003, 36, 9325.", "Organometallics 2004, 23, 5332.", "Eur. J. Inorg. Chem. 2005, 1003.", and "Eur. J. Inorg. Chem. 2009,1759.".

In the transition metal compound (1), planes of the indenyl ring moieties, which interpose the crosslinking moiety therebetween and connect to the center metal, are present in two directions (a front plane and a back plane). Therefore, when no plane of symmetry is present in the 2-indenyl ring moiety, two structural isomers represented by the following general formula [10a] or [10b] are present by way of an example.

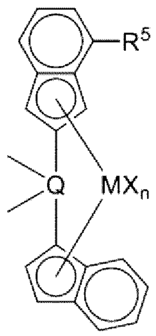
· · · [10a]

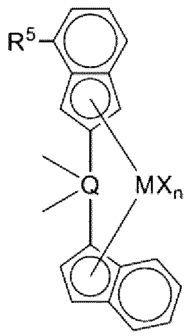
· · · [10b]

Likewise, also when the substituents $R^{13}$ and $R^{14}$ of the crosslinking moiety are not the same, two structural isomers represented by the following general formula [11a] or [11b] are present by way of an example.

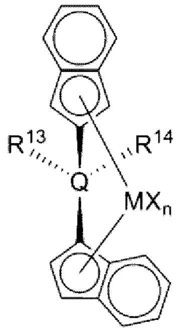
· · · [11a]

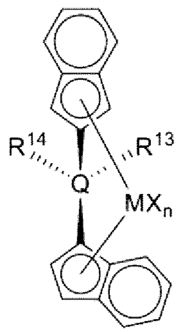
· · · [11b]

Purification and fractionation of these structural isomer mixtures or selective production of the structural isomers are enabled by known methods, and the production method therefore is not particularly limited. Examples of a known production method include production methods disclosed in patent literature JP H10-109996A, "Organometallics 1999, 18, 5347.", "Organometallics 2012, 31, 4340.", and patent literature JP 2011-502192A, for example, in addition to those listed as the production method for the transition metal compound (1).

Within the range of the transition metal compound (1), a transition metal compound may be used singly, two or more thereof may be used in combination, a structural isomer mixture may be used, a structural isomer may be used singly, or a mixture of two or more structural isomers may be used. As mentioned above, according to the present invention, an ethylene polymer including much long chain branching introduced therein can be produced with a high catalyst activity, using only the transition metal compound (1) as the transition metal compound constituting the catalyst for olefin polymerization, but one or more transition metal compounds different from the transition metal compound (1) may be used in combination as the transition metal compound as long as this effect is not impaired. In this case, the transition metal compound (1) may be in any of the forms described above.

<Solid support (S)>

The solid support (S) included in the catalyst for olefin polymerization (X) is an inorganic compound or organic compound and is a granular or fine particulate solid.

Examples of the inorganic compound to be used as the solid support (S) include porous oxide, a solid aluminoxane compound, inorganic chloride, clay, clay mineral, or an ion-exchangeable layered compound.

The porous oxide used are, for example, $SiO_2$, $Al_2O_3$, MgO, ZrO, $TiO_2$, $B_2O_3$, CaO, ZnO, BaO, and $ThO_2$, or a composite or a mixture including such an oxide, specifically, natural or synthetic zeolite, $SiO_2$-MgO, $SiO_2$-$Al_2O_3$, $SiO_2$-$TiO_2$, $SiO_2$-$V_2O_5$, $SiO_2$-$Cr_2O_3$, and $SiO_2$-$TiO_2$-MgO, for example. Of these, one mainly containing $SiO_2$ is preferred.

The porous oxide may contain a small amount of a carbonate, a sulfate, a nitrate, or an oxide component, such as $Na_2CO_3$, $K_2CO_3$, $CaCO_3$, $MgCO_3$, $Na_2SO_4$, $Al_2(SO_4)_3$, $BaSO_4$, $KNO_3$, $Mg(NO_3)_2$, $Al(NO_3)_3$, $Na_2O$, $K_2O$, or $Li_2O$.

Such porous oxide differs in properties depending on the type and the production method, and one having a particle size in a range normally from 0.2 to 300 um, preferably 1 to 200 um, a specific surface area in a range normally from 50 to 1200 $m^2/g$, preferably 100 to 1000 $m^2/g$, and a pore volume in a range normally from 0.3 to $30cm^3/g$ is preferred as the solid support (S). Such a support is, if necessary, calcined at 100 to 1000°C, preferably 150 to 700°C, for example, and then used.

Examples of the solid aluminoxane compound include an aluminoxane of a structure represented by the following

general formula (S-a), an aluminoxane of a structure represented by the following general formula (S-b), and an aluminoxane having, as the structure, a repeating unit represented by the following general formula (S-c) and a repeating unit represented by the following general formula (S-d) .

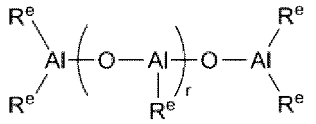 ・・・ (S − a) 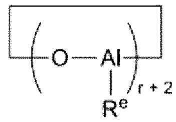 ・・・ (S − b)

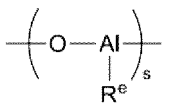 ・・・ (S − c) 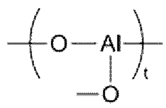 ・・・ (S − d)

In the formulas (S-a) to (S-d) above, $R^e$'s are each independently a C1-C10 hydrocarbon group, preferably a C1-C4 hydrocarbon group. Specific examples thereof include hydrocarbon groups such as a methyl group, an ethyl group, a propyl group, an isopropyl group, an isopropenyl group, a n-butyl group, a sec-butyl group, a tert-butyl group, a pentyl group, a hexyl group, an octyl group, a decyl group, a dodecyl group, a tridecyl group, a tetradecyl group, a hexadecyl group, an octadecyl group, an eicosyl group, a cyclohexyl group, a cyclooctyl group, a phenyl group, a tolyl group, and an ethylphenyl group. A methyl group, an ethyl group, and an isobutyl group are preferred, and a methyl group is particularly preferred. Some of $R^e$'s may be substituted by a halogen atom such as chlorine or iodine, and the halogen content may be 40 wt% or less on the basis of $R^e$'s. Linear lines of which one end is not connected to an atom in the above formulas (S-c) and (S-d) represent binding to another atom not shown.

In the formulas (S-a) and (S-b), r represents an integer of 2 to 500, preferably 6 to 300, particularly preferably 10 to 100. In the formulas (S-c) and (S-d), s and t each represent an integer of 1 or more. r, s, and t are selected such that the aluminoxane can substantially maintain a solid state under a reaction environment where the aluminoxane is used.

The solid aluminoxane compound is one obtained by solidifying alkylaluminum compound as the main component, without including an inorganic solid component such as silica or alumina and an organic polymer component such as polyethylene and polystyrene, unlike conventionally known support for olefin polymerization catalysts. The term "solid" denotes that the aluminoxane component substantially maintains a solid state in a reaction environment where the aluminoxane component is used. More specifically, the term "solid" denotes that the aluminoxane component substantially maintains a solid state, as described below, when the component (A) is brought into contact with the aluminoxane component to prepare a catalyst for olefin polymerization (e.g., a catalyst for ethylene polymerization), and when olefin (e.g., ethylene) is polymerized (e.g., suspension-polymerized) using the prepared catalyst for olefin polymerization.

The simplest way to confirm whether the aluminoxane component is in a solid state or not is visual confirmation, but visual confirmation is often difficult during polymerization, for example. In such a case, it is possible to determine the state by means of the properties of a polymer powder obtained after the polymerization or the state of adherence to the reactor, for example. Conversely, when the properties of the polymer powder are favorable and the amount of the powder adhering to the reactor is small, there is no departure from the spirit of the present invention, even if a portion of the aluminoxane component is eluted to a certain degree under the polymerization environment. Examples of an index to determine the properties of the polymer powder include a bulk density, a particle shape, a surface shape, and a degree of presence of an amorphous polymer, and from the viewpoint of quantitativeness, a polymer bulk density is preferred. The bulk density is in a range normally from 0.01 to 0.9, preferably 0.05 to 0.6, more preferably 0.1 to 0.5.

The ratio of dissolution of the solid aluminoxane compound to n-hexane maintained at a temperature of 25°C is in a range normally from 0 to 40 mol%, preferably 0 to 20 mol%, particularly preferably 0 to 10 mol%.

The ratio of dissolution is determined by adding 2 g of the solid aluminoxane compound support to 50 ml of n-hexane maintained at 25°C followed by stirring for two hours, then separating the solution portion using a G-4 glass filter, and measuring the aluminum concentration in this filtrate. Accordingly, the ratio of dissolution is determined as the ratio of the aluminum atoms present in the filtrate to the amount of aluminum atoms corresponding to 2 g of the aluminoxane used.

As the solid aluminoxane compound, a known solid aluminoxane can be used without limitation, and the solid polyaluminoxane composition described in patent literature WO 2014/123212, for example, also can be used. Examples of known production methods include production methods described in patent literature JP H07-042301B, JP H06-220126A, JP H06-220128A, JP H11-140113A, JP H11-310607A, JP 2000-38410A, JP 2000-95810A, and WO 2010/55652.

The average particle size of the solid aluminoxane compound is in a range generally from 0.01 to 50000 um, preferably 0.1 to 1000 um, particularly preferably 1 to 200 um. The average particle size of the solid aluminoxane

compound can be determined by observing particles with a scanning electron microscope, measuring the particle size of 100 or more particles, followed by weight-averaging the sizes. As for the particle size d of each particle, first, a particle image is interposed between two parallel lines both in the horizontal direction and the vertical direction to measure the lengths, and the particle size d of each particle can be determined by the following equation.

$$\text{Particle size d} = ((\text{length in the horizontal direction})^2 + (\text{length in the vertical direction})^2)^{0.5}$$

Next, the weight average particle size of the solid aluminoxane compound can be determined using the particle size d determined above and the particle number n by the following equation.

$$\text{Average particle size} = \Sigma nd^4/\Sigma nd^3$$

The solid aluminoxane compound desirably has a specific surface area of 50 to 1000 $m^2/g$, preferably 100 to 800 $m^2/g$ and a pore volume of 0.1 to 2.5 $cm^3/g$.

Examples of the inorganic halide include $MgCl_2$, $MgBr_2$, $MnCl_2$, and $MnBr_2$. The inorganic halide may be used as it is or may be used after crushed with a ball mill or a vibrating mill. Further, the inorganic halide may be used after being dissolved in solvents such as alcohols and precipitated as fine particles with a precipitating agent.

The clay normally includes a clay mineral as a main component. The ion-exchangeable layered compound is a compound having a crystal structure in which planes formed by, for example, ionic bonds are mutually stacked in parallel by a weak bond strength, and in which ions contained therein are exchangeable. Most clay mineral is the ion-exchangeable layered compound. Such a clay, a clay mineral, and an ion-exchangeable layered compound here used are not limited to natural products, and can also be artificially synthesized products.

Examples of the clay, clay mineral or ion-exchangeable layered compound can include clay, clay mineral, and ionic crystalline compounds having a layered crystal structure, such as a hexagonal closest packing type, an antimony type, a $CdCl_2$ type and a $CdI_2$ type.

Examples of such a clay and a clay mineral include kaolin, bentonite, kibushi clay, gairome clay, allophane, hisingerite, pyrophyllite, micas, montmorillonites, vermiculite, chlorite rocks, palygorskite, kaolinite, nacrite, dickite and halloysite. Examples of the ion-exchangeable layered compound include crystalline acidic salts of a polyvalent metal, such as $\alpha$-$Zr(HAsO_4)_2 \cdot H_2O$, $\alpha$-$Zr(HPO_4)_2$, $\alpha$-$Zr(KPO_4)_2 \cdot 3H_2O$, $\alpha$-$Ti(HPO_4)_2$, $\alpha$-$Ti(HAsO_4)_2 \cdot H_2O$, $\alpha$-$Sn(HPO_4)_2 \cdot H_2O$, $\gamma$-$Zr(HPO_4)_2$, $\gamma$-$Ti(HPO_4)_2$ and $\gamma$-$Ti(NH_4PO_4)_2 \cdot H_2O$.

Such a clay, a clay mineral, or an ion-exchangeable layered compound is preferably one having a volume of pores of 0.1 cc/g or more, particularly preferably one having a volume of pores of 0.3 to 5 cc/g, the pores having a radium of 20 Å or more, as determined by mercury porosimetry. The volume of pores is measured by mercury porosimetry using a mercury porosimeter on a range of a pore radius from 20 to $3 \times 10^4$ Å. When one having a volume of pores having a radius of 20 Å or more of less than 0.1 cc/g is used as the support, a high polymerization activity tends to be unlikely to be obtained.

The clay and the clay mineral are also preferably subjected to a chemical treatment. The chemical treatment here used can be any treatment such as a surface treatment for removal of impurities attached to a surface, or a treatment having an effect on the crystal structure of the clay. Specific examples of the chemical treatment include an acid treatment, an alkali treatment, a salt treatment, and an organic substance treatment. The acid treatment removes impurities on the surface and additionally increases the surface area by eluting cations such as Al, Fe, and Mg in the crystal structure. The alkali treatment breaks the crystal structure of clay, resulting in a change in the structure of the clay. The salt treatment and organic substance treatment form an ion complex, a molecular complex, or an organic derivative, for example to thereby enable the surface area and the interlayer distance to be changed.

The ion-exchangeable layered compound may be a layered compound where a space between layers is enlarged by exchanging an exchangeable ion in the space between layers with another large and bulky ion by means of ion exchangeability. Such a bulky ion serves as a shore supporting a layered structure, and is normally referred to as pillar. Such introduction of another substance into the space between layers in the layered compound is referred to as intercalation. Examples of a guest compound to be intercalated include cationic inorganic compounds such as $TiCl_4$ and $ZrCl_4$, metal alkoxides such as $Ti(OR)_4$, $Zr(OR)_4$, $PO(OR)_3$ and $B(OR)_3$, wherein R represents, for example, a hydrocarbon group, and metal hydroxide ions such as $[Al_{13}O_4(OH)_{24}]^{7+}$, $[Zr_4(OH)_{14}]^{2+}$ and $[Fe_3O(OCOCH_3)_6]^+$. Such a compound may be used singly or in combination of two or more kinds thereof. In intercalation of such a compound, a polymerized product obtained by hydrolysis of a metal alkoxide such as $Si(OR)_4$, $Al(OR)_3$ or $Ge(OR)_4$, wherein R represents, for example, a hydrocarbon group, a colloidal inorganic compound such as $SiO_2$, or the like can also coexist. Examples of

the pillar include oxide generated by intercalation of the metal hydroxide ion into the space between layers and then heating and dehydration.

The clay, the clay mineral, and the ion-exchangeable layered compound may be used as they are, or may be used after being subjected to a treatment such as ball milling or screening. Alternatively, they may be used after water is newly added and adsorbed thereto, or after a heat dehydration treatment is conducted thereon. Further, these may be used singly, or in combinations of two or more thereof.

Examples of the organic compound used as the solid support (S) include a granular or fine particulate solid having a particle size in a range from 10 to 300 um. Specific examples of the organic compound include a granular or fine particulate solid including a polymer produced using a C2-C14 olefin such as ethylene, propylene, 1-butene, or 4-methyl-1-pentene as a main component, a polymer or reactant produced using vinyl cyclohexane, styrene or divinylbenzene as a main component, or modified products thereof.

The solid support (S) is preferably a porous oxide, from the viewpoint of prevention of foreign substances during forming.

<Component (C)>

The catalyst for olefin polymerization (X) may preferably further contain the component (C); the component (C) is at least one compound selected from the group consisting of an organometal compound (c-1) represented by the following general formulas (3) to (5), an organoaluminumoxy compound (c-2), and a compound (c-3) that reacts with the component (A) to form an ion pair.

$$R^a{}_mAl(OR^b)_nH_pX_q \cdots \qquad (3)$$

In the formula (3), $R^a$ and $R^b$ each independently represent a C1-C15 hydrocarbon group, X represents a halogen atom, m is a number of $0 < m \leq 3$, n is a number of $0 \leq n < 3$, p is a number of $0 \leq p < 3$, q is a number of $0 \leq q < 3$, and $m + n + p + q = 3$ is satisfied.

$$M^aAlR^a{}_4 \cdots \qquad (4)$$

In the formula (4), $M^a$ represents Li, Na, or K, and $R^a$ represents a C1-C15 hydrocarbon group.

$$R^a{}_rM^bR^b{}_sX_t \cdots \qquad (5)$$

In the formula (5), $R^a$ and $R^b$ each independently represent a C1-C15 hydrocarbon group, $M^b$ is selected from Mg, Zn, and Cd, X represents a halogen atom, r satisfies $0 < r \leq 2$, s satisfies $0 \leq s \leq 1$, t satisfies $0 \leq t \leq 1$, and $r + s + t = 2$ is satisfied.

Among the organometal compounds (c-1), one represented by the formula (3) is preferred, and specific examples include trialkylaluminums such as trimethylaluminum, triethylaluminum, triisopropylaluminum, triisobutylaluminum, trihexylaluminum, trioctylaluminum, and tri-2-ethylhexylaluminum;

dialkylaluminum halides such as dimethylaluminum chloride, diethylaluminum chloride, diisopropylaluminum chloride, diisobutylaluminum chloride, and dimethylaluminum bromide;
alkylaluminum sesquihalides such as methylaluminum sesquichloride, ethylaluminum sesquichloride, isopropylaluminum sesquichloride, butyl aluminum sesquichloride, and ethylaluminum sesquibromide;
alkylaluminum dihalides such as methylaluminum dichloride, ethylaluminum dichloride, isopropylaluminum dichloride, and ethylaluminum dibromide;
alkylaluminum hydrides such as dimethylaluminum hydride, diethylaluminum hydride, dihydrophenylaluminum hydride, diisopropylaluminum hydride, di-n-butylaluminum hydride, diisobutylaluminum hydride, diisohexylaluminum hydride, diphenylaluminum hydride, dicyclohexylaluminum hydride, di-sec-heptylaluminum hydride, and di-sec-nonylaluminum hydride; and
dialkylaluminum alkoxides such as dimethylaluminum ethoxide, diethylaluminum ethoxide, diisopropylaluminum methoxide, and diisobutylaluminum ethoxide.

Examples of the formula (4) include lithium aluminum hydride, examples of the formula (5) include a dialkyl zinc compound described in patent literature JP 2003-171412A, for example; and these may be also used in combination with a phenol compound, for example.

The organoaluminum oxy compound (c-2) is preferably an organoaluminum oxy compound prepared from trialkylaluminum or tricycloalkylaluminum, particularly preferably an aluminoxane prepared from trimethylaluminum or

triisobutylaluminum, for example, methylaluminoxane. Such organoaluminum oxy compounds may be used singly or in combination of two or more kinds thereof.

As the compound (c-3) that reacts with the component (A) to form an ion pair, Lewis acids, ionic compounds, borane compounds, and carborane compounds described in, for example, patent literature JP H01-501950A, JP H01-502036A, JP H03-179005A, JP H03-179006A, JP H03-207703A, JP H03-207704A and US 5321106B, and additionally heteropoly compounds and isopoly compounds can be used.

When the organoaluminum oxy compound such as methylaluminoxane is used as a cocatalyst component in combination, the catalyst for olefin polymerization (X), not only the catalyst for olefin polymerization (X) exhibits extremely high polymerization activity on olefin compounds, but also a solid support component containing the cocatalyst component can be easily prepared as a result of a reaction with active hydrogen in the solid support. Thus, the component (C) preferably contains at least the organoaluminum oxy compound (c-2).

<Usage method and the order of addition of each component>

The catalyst for olefin polymerization (X) can be prepared by mixing the component (A) and the component (S) and optionally the component (C) in an inert hydrocarbon and bringing the components into contact with one another.

Examples of the method for bringing each of the components into contact, with a focus on the order of contact, include:

(i) a method of bringing the component (A) into contact with the component (S),
(ii) a method of bringing the component (C) into contact with the component (S) and then bringing the component (A) into contact therewith,
(iii) a method of bringing the component (C) into contact with the component (A) and then bringing the component (S) into contact therewith,
(iv) a method of bringing the component (C) into contact with component (S) and then bringing a mixture of the component (A) and the component (C) into contact therewith, and
(v) a method of bringing the component (C) into contact with the component (S), further bringing the component (C) into contact therewith, and then bringing a mixture of the component (A) and the component (C) into contact therewith.

When a plurality of types of the component (C) is used, the components (C) may be the same or different. Among the methods described above, (i), (ii), and (iii) are preferred.

In each of the above-described methods showing a form of the order of contact, fouling during the polymerization reaction is reduced or particle properties of the produced polymer are improved by allowing a component (G) to coexist in the step including the contact between the component (S) and the component (C) and in the step including the contact between the component (S) and the component (A). As the component (G), a compound having a polar functional group can be used; preferred is a non-ionic surfactant, and more preferred is a polyalkylene oxide block, a higher aliphatic amide, a polyalkylene oxide, a polyalkylene oxide alkyl ether, an alkyl diethanolamine, a polyoxyalkylene alkylamine, a glycerine fatty acid ester, and a N-acyl amino acid. These may be used singly, or in combinations of two or more thereof.

Examples of a solvent to be used for preparation of the catalyst for olefin polymerization (X) include inert hydrocarbon solvents, and specific examples thereof include aliphatic hydrocarbons such as propane, butane, pentane, hexane, heptane, octane, decane, dodecane, and kerosene, alicyclic hydrocarbons such as cyclopentane, cyclohexane, and methylcyclopentane, aromatic hydrocarbons such as benzene, toluene, and xylene, halogenated hydrocarbons such as ethylene chloride, chlorobenzene, and dichloromethane, and mixtures thereof.

In the contact between the component (C) and the component (S), chemical bonding is achieved by the reaction of the reaction site in the component (C) with the reaction site in the component (S) to form a contact product of the component (C) and the component (S). The time for the contact between the component (C) and the component (S) is normally 1 minute to 20 hours, preferably 30 minutes to 10 hours, and the temperature at which the contact is made is normally -50 to 200°C, preferably -20 to 120°C. If the initial contact between the component (C) and the component (S) is made rapidly, the component (S) is collapsed due to its reaction exotherm or reaction energy, the morphology of the resulting solid catalyst component deteriorates. In a case of using this for polymerization often makes continuous operation difficult due to poor polymer morphology. Thus, in the initial stage of the contact between the component (C) and the component (S), it is preferred that the contact be made at a lower temperature to reduce the reaction exotherm, or that the reaction exotherm be controlled and the reaction be conducted at a rate capable of maintaining the initial contact temperature. The same applies to the case where the contact between the component (C) and the component (S) is made, and the component (C) is further brought into contact therewith. The contact weight ratio of the component (C) and the component (S) (weight of the component (C)/weight of the component (S)) can be selected arbitrarily, but a higher contact weight ratio enables more of the component (A) to be brought into contact and enables the catalyst activity per weight of the solid catalyst component to increase.

The contact weight ratio of the component (C) and the component (S) [= weight of the component (C)/weight of the component (S)] is preferably 0.05 to 3.0, particularly preferably 0.1 to 2.0.

When the component (A) and the contact product of the component (C) and the component (S) are brought into contact with each other, the time for the contact is normally 1 minute to 20 hours, preferably 1 minute to 10 hours, and the contact temperature is normally in a range from -50 to 200°C, preferably from -50 to 100°C.

The component (C-1) is used in an amount such that the molar ratio [(C-1)/M] of the component (C-1) to all the transition metal atoms (M) in the component (A) is normally 0.01 to 100,000, preferably 0.05 to 50,000.

The component (C-2) is used in an amount such that the molar ratio [(C-2)/M] of the component (C-2) (in terms of aluminum atom) to all the transition metal atoms (M) in the component (A) is normally 10 to 500,000, preferably 20 to 100,000.

The component (C-3) is used in an amount such that the molar ratio [(C-3)/M] of the component (C-3) to all the transition metal atoms (M) in the component (A) is normally 1 to 10, preferably 1 to 5.

The ratio of the component (C) to all the transition metal atoms (M) in the component (A) can be determined by inductively coupled plasma emission spectroscopy (ICP analysis). For ethylene polymerization, the catalyst for olefin polymerization (X) may be used as it is, and this catalyst for olefin polymerization may also be used after prepolymerizing thereonto an olefin to form a prepolymerized catalyst (XP).

The prepolymerized catalyst (XP) can be prepared by prepolymerizing ethylene, for example, in the presence of the catalyst for olefin polymerization (X), normally in an inert hydrocarbon solvent. The preparation can be performed by any method of batchwise, semicontinuous or continuous, and can also be performed under reduced pressure, normal pressure, or pressurization. Further, desirably, the prepolymerized catalyst (XP) is produced in an amount of 0.01 to 1000g, preferably 0.1 to 800 g, more preferably 0.2 to 500 g per 1 g of the solid catalyst component, by prepolymerization.

The prepolymerized catalyst (XP) produced in the inert hydrocarbon solvent may be separated from the suspension and then suspended again in an inert hydrocarbon, and ethylene may be introduced into the thus obtained suspension. Alternatively the prepolymerized catalyst (XP) produced in the inert hydrocarbon solvent may be dried, and then ethylene may be introduced.

The prepolymerization temperature is -20 to 80°C, preferably 0 to 60°C, and the prepolymerization time is 0.5 to 100 hours, preferably 1 to about 50 hours. An olefin preferably including ethylene as the main component is used for the prepolymerization.

As the form of the solid catalyst component used for the prepolymerization, those already mentioned can be utilized without limitation. Additionally, the component (C) is used as necessary, and the organometal compound (c-1) represented by the formula (3) is preferably used. When the component (C) is used, the component (C) is used in an amount such that the molar ratio (Al/M) of the aluminum atom (Al) in the component (C) to the transition metal atom (M) in the component (A) is 0.1 to 10000, preferably 0.5 to 5000.

It is desirable that the concentration of the catalyst for olefin polymerization (X) in the prepolymerization system be, as the catalyst for olefin polymerization/polymerization volume ratio, normally 1 to 1000 grams/liter, further 10 to 500 grams/liter. In prepolymerization, the component (G) may be allowed to coexist to reduce fouling or improve the particle properties.

Also, for the purpose of improvement in the flowability of the prepolymerized catalyst (XP) or reduction of the occurrence of a heat spot, a sheeting or a polymer lump in polymerization, the component (G) may be brought into contact with the prepolymerized catalyst (XP) once produced by the prepolymerization.

The temperature in bringing the component (G) into contact is normally -50 to 50°C, preferably -20 to 50°C, and the contact time is normally 1 minute to 20 hours, preferably 5 minutes to 10 hours.

In bringing the catalyst for olefin polymerization (X) and the component (G) into contact with each other, the component (G) is used in an amount of 0.1 to 20 parts by mass, preferably 0.3 to 10 parts by mass, more preferably 0.4 to 5 parts by mass, per 100 parts by mass of the catalyst for olefin polymerization (X).

Mixing and contacting of the catalyst for olefin polymerization (X) and the component (G) can be conducted in an inert hydrocarbon solvent, and examples of the inert hydrocarbon solvent include the same as those described above.

In the production method of the ethylene polymer according to the present invention, as the catalyst for olefin polymerization (X), one obtained by drying the prepolymerized catalyst (XP) (hereinafter, also referred to as the "dried prepolymerized catalyst ") can be used. The prepolymerized catalyst (XP) is dried normally after removal of the hydrocarbon, as the dispersion medium, by filtration, for example, from the suspension of the obtained prepolymerized catalyst.

The prepolymerized catalyst (XP) is dried by maintaining the prepolymerized catalyst (XP) under an inert gas flow at a temperature in the range of 70°C or less, preferably from 20 to 50°C. It is desirable that the amount of volatile components of the obtained dried prepolymerized catalyst be 2.0 wt% or less, preferably 1.0 wt% or less. The amount of the volatile component in the dried prepolymerized catalyst is preferably as small as possible, with no particular lower limit, but it is practically 0.001 wt%. The drying time is normally 1 to 48 hours, although depending on the drying temperature.

The dried prepolymerized catalyst excels in flowability and thus can be stably supplied to a polymerization

reactor. Additionally, when the dried prepolymerized catalyst is used, accompaniment of the solvent used for the suspension into the gas phase polymerization system is avoided, and thus polymerization can be stably performed.

[Method for producing ethylene polymer]

Next, the method for producing an ethylene polymer according to the present invention will be described. An ethylene polymer is obtained by polymerizing (homopolymerizing or copolymerizing) ethylene in the presence of the catalyst for olefin polymerization (X) mentioned above. By using the catalyst for olefin polymerization (X), a low-density ethylene copolymer that excels in forming processability and mechanical strength and has much long chain branching can be efficiently produced with a high polymerization activity. The ethylene polymer of the present invention refers to one having an ethylene content of 10 mol% or more in the polymer.

In the present invention, the polymerization can be carried out either by a liquid phase polymerization method such as solution polymerization or suspension polymerization or by a gas phase polymerization method. In the suspension polymerization method and gas phase polymerization method, the prepolymerized catalyst (XP) is preferably used.

Specific examples of an inert hydrocarbon medium used in the liquid phase polymerization method include aliphatic hydrocarbons such as propane, butane, pentane, hexane, heptane, octane, decane, dodecane, and kerosene; alicyclic hydrocarbons such as cyclopentane, cyclohexane, and methylcyclopentane; aromatic hydrocarbons such as benzene, toluene, and xylene; halogenated hydrocarbons such as ethylene chloride, chlorobenzene, and dichloromethane; and mixtures thereof. The olefin, by itself, also can be used as the solvent in the liquid phase polymerization method.

In polymerizing ethylene using the above-described catalyst for olefin polymerization, the component (A) is used in an amount so as to be normally $1 \times 10^{-12}$ to $1 \times 10^{-1}$ mol, preferably $1 \times 10^{-8}$ to $1 \times 10^{-2}$ mol per 1 liter of the reaction volume. Additionally, the component (C) is used, and particularly, the organic aluminum compound represented by the formula (3) in (c-1) is preferably used.

The temperature for polymerization of ethylene for which the prepolymerized catalyst (XP) is used is in a range normally from -50 to +200°C, preferably 0 to 170°C, particularly preferably 60 to 170°C. The polymerization pressure is normally under conditions of normal pressure to 100 kgf/cm$^2$, preferably normal pressure to 50 kgf/cm$^2$. The polymerization reaction can be carried out in any method of batchwise, semi-continuous, and continuous methods. Moreover, polymerization can be performed at two or more divided stages different in reaction conditions.

The molecular weight of the resulting polymer can be regulated by allowing hydrogen to exist in the polymerization system or changing the polymerization temperature. Generally, as the low molecular weight component increases, adherence to the polymerization reactor wall or stirring blade increases. Thus, application of a burden to the cleaning step may cause a decrease in the productivity. In polymerization, the component (G) may be allowed to coexist to reduce fouling or improve particle properties.

In the present invention, the monomer supplied with ethylene to the copolymerization reaction is one or more monomers selected from α-olefins having 4 to 10 carbon atoms, preferably α-olefins having 6 to 10 carbon atoms. Specific examples of the α-olefins having 4 to 10 carbon atoms include propylene, 1-butene, 1-pentene, 1-hexene, 4-methyl-1-pentene, 1-octene, and 1-decene. A monomer other than ethylene and α-olefins having 4 to 10 carbon atoms may be supplied as long as the effects of the present invention are not impaired, or may not be supplied.

<Method for producing ethylene-α-olefin copolymer (B)>

The ethylene-α-olefin copolymer (B) can be obtained by polymerizing ethylene and one or more α-olefins having 4 or more and 10 or less carbon atoms. As long as one satisfying the above-described requirements is obtained, the polymerization catalyst to be used and polymerization conditions are not particularly limited. Examples of the ethylene-α-olefin copolymer (B) that can be used include commercially available products such as linear low density polyethylene, an ethylene-α-olefin copolymer, and high density polyethylene. When a commercially product is used, one satisfying the requirements (a) to (c) may be selected from LLDPE EVOLUE (registered trademark) and ULTZEX (registered trademark) manufactured by Prime Polymer Co., Ltd., for example.

<Method for producing ethylene resin composition (Z)>

The ethylene resin composition (Z) can be produced by melt-kneading the ethylene-α-olefin copolymer (A) and the ethylene-α-olefin copolymer (B) or also can be produced by dry-blending pellets obtained by granulating the ethylene-α-olefin copolymer (A) and pellets of the ethylene-α-olefin copolymer (B). In the case of production by melt-kneading, a continuous extruder or a closed extruder can be used. Examples thereof include a single-screw extruder, a twin-screw extruder, a mixing roll, a banbury mixer, and a kneader. Of these, a single-screw extruder or a twin-screw extruder is preferably used, from the viewpoint of economic efficiency and treatment efficiency, for example.

When the above-described melt-kneading and dry-blending is conducted, in addition to the ethylene-α-olefin

copolymer (A) and the ethylene-$\alpha$-olefin copolymer (B), the above-described "additional thermoplastic resin" may be blended. Alternatively, in addition to "additional thermoplastic resin" or instead of "additional thermoplastic resin", the above-described "additive" may be further mixed.

The order of adding the "additional thermoplastic resin" and the "additive" is not particularly limited. For example, the "additional thermoplastic resin" and "additive" may be blended with one of the ethylene-$\alpha$-olefin copolymer (A) and the ethylene-$\alpha$-olefin copolymer (B) or with both thereof simultaneously, or may be added after the ethylene-$\alpha$-olefin copolymer (A) and the ethylene-$\alpha$-olefin copolymer (B) are kneaded.

The ethylene·$\alpha$-olefin copolymer (A) and the ethylene·$\alpha$-olefin copolymer (B) each may include at least one or more types of constitutional units derived from a biomass-derived ethylene or $\alpha$-olefin. The monomers of the same type constituting the polymer may be biomass-derived monomers only, may be fossil fuel-derived monomers only, or may include both biomass-derived monomer and fossil fuel-derived monomers. The biomass-derived monomer is a monomer derived from any renewable raw natural materials such as the ones derived from plants or derived from animals, including fungi, yeasts, algae, and bacteria, and residues thereof. The monomer contains the 14C isotope as carbon at a ratio of about $1 \times 10^{-12}$ and has a biomass carbon concentration (pMC) of about 100 (pMC) as measured in accordance with ASTM D6866. Biomass-derived ethylene and $\alpha$-olefin are obtained by, for example, conventionally-known methods. It is preferred from the viewpoint of reduction in a burden on the environment that the ethylene-$\alpha$-olefin copolymer (A) and/or the ethylene-$\alpha$-olefin copolymer (B) include a constitutional unit derived from a biomass-derived monomer.

[Shaped article, film, and multilayer film]

A shaped article, preferably a film, or a multilayer film, having excellent formability, excellent mechanical strength such as impact strength, high transparency, and excellent rigidity can be obtained by processing the ethylene resin composition (Z) according to the present invention. This multilayer film has at least one layer including the above-described ethylene resin composition (Z), and preferably, in this multilayer film, at least one of the surface layers is a layer including the ethylene resin composition (Z). The base material constituting this multilayer film may include the ethylene resin composition (Z) or may include a material other than the ethylene resin composition (Z).

The ethylene resin composition (Z) of the present invention is processed by, for example, common film forming, sheet molding, blow molding, injection molding, and extrusion molding. Examples of film forming include extrusion lamination, film formation with a T-die, and inflation molding (air cooling, water cooling, multistage cooling, or high speed processing). The resulting film can be used as a single layer, but various functions can be further imparted thereto when the film is formed into a multilayer. Examples of techniques for forming such a film include a coextrusion. A lamination technique such as extrusion lamination or dry lamination enables lamination on paper or a barrier film such as aluminum foil, vapor-deposited film, or coating film, which is difficult to coextrude. Briefly, for obtaining a multilayer film in which at least one surface layer is formed of a layer including the ethylene resin composition (Z), these methods may be used as a measure for laminating a layer including the ethylene resin composition (Z) on the base material.

A multilayer structure can be formed by coextrusion in blow molding, injection molding, or extrusion molding as well as in the film forming to produce a highly functional product.

Examples of a shaped article obtained by processing the ethylene resin composition (Z) of the present invention include a film, a sheet, a blown infusion bag, a blown bottle, a gasoline tank, a tube by extrusion molding, a pipe, a wire coating, a tear off cap, an injection-molded product such as a household article, a fiber, and large molded product obtained by rotational molding.

Further, the film obtained by processing the ethylene resin composition (Z) of the present invention is suitable for applications including various films for packaging such as a bag for water-containing product, a bag for liquid soup packaging, a paper container for liquid, an original laminated fabric, a specially-shaped bag for liquid packaging (such as a standing pouch), a standard bag, a heavy duty bag, a wrap film, a sugar bag, a bag for oil-containing product, and food packaging; and also suitable for a protective film, an infusion solution bag, an agricultural material, a bag-in-box, and a clean film used for packaging of a semiconductor material, a pharmaceutical product, or food. At this time, the film can be used as a film having one or more layers including the ethylene resin composition (Z), or can be used also as a multilayer film having a form in which a layer including the ethylene resin composition (Z) is laminated on a substrate including a nylon, polyester, or polyolefin film, for example.

The raw material of the substrate of the multilayer film may contain an ethylene polymer or propylene polymer including a biomass-derived monomer.

Examples

Hereinafter, the present invention will be described more specifically with reference to Examples. However, the present invention is not limited to Examples below.

[Methods for measurement or evaluation]

In Examples below, for example, various physical properties of ethylene-α-olefin copolymers, for example, were measured by the methods described in [Description of Embodiments], and as evaluation methods not described in [Description of Embodiments], the following methods were employed.

Inflation molding evaluation:

A 50 mmφ extruder and an inflation molding machine having a die diameter of 100 mm manufactured by Sumitomo Heavy Industries Modern, Ltd. were used to obtain a 40-um thick film from an ethylene polymer under conditions of a dice temperature of 190°C, an extrusion amount of 29 kg/hr, and a tube width of 320 mm. The obtained film was measured for the following items.

[Haze]

The total haze of the obtained film was measured in accordance with JIS 7136.

[Internal haze]

The obtained film was placed in a cell filled with cyclohexanol, and measurement was conducted in accordance with JIS 7136.

[Gloss at 20°]

The gloss of the obtained film was measured at an incident angle of 20°in accordance with JIS Z8741.

[Tensile modulus]

Measurement was conducted in the MD direction and the TD direction of the obtained film at a test speed of 200 mm/min in accordance with JIS K6781.

[Dart impact]

In accordance with ASTM D1709, method A, the obtained film was clamped with a pneumatic clamping system, a hemispherical dart was dropped from a fixed height, and the load at which 50% of the film was broken was read from a graph.

[Blocking force]

A 10-kg load was applied at 50°C on a specimen obtained by layering the inner surfaces of two tubular films obtained, and the specimen was aged for three days. Thereafter, the specimen was cut to a 200-mm width, and a force required to pull apart at 23°C and 200 mm/min was measured as the blocking force.

[Melt tension of composition]

The obtained film was measured using a capillary rheometer: CAPILOGRAPH 1D manufactured by Toyo Seiki Seisakusho, Ltd. The conditions are as follows: resin temperature of 190°C, melting time of 6 minutes, barrel diameter of 9.55 mmφ, extrusion speed of 15 mm/min, winding speed of 24 m/min (when the molten filament was broken, winding speed was reduced by 5 m/min), nozzle diameter of 2.095 mmφ, and nozzle length of 8 mm.

[Resin pressure]

The resin pressure in film forming under the above-mentioned conditions was noted.

[Melt film stability]

The melt film (bubble) stability in film forming under the above-mentioned conditions was visually confirmed. The meanings of the symbols in Table 12 (evaluation results) are as follows.

AA: The melt film (bubbles) is stable, and fluctuations are few.
BB: The stability of the melt film (bubbles) is somewhat poor, and fluctuations are observed.
CC: The stability of the melt film (bubbles) is poor, and fluctuations are severe.

[Raw materials used]

The transition metal compounds and components (G) used in Examples, for example, are as follows.

Transition metal compound (A-1): dimethylsilylene(2-indenyl)(4-(3,5-di-tert-butyl-4-methoxyphenyl)-7-methoxy-1-indenyl)zirconium dichloride [synthesized by the method described in patent literature JP 2019-059933A]
Transition metal compound (B-1): dimethylsilylene(3-n-propylcyclopentadienyl)(cyclopentadienyl)zirconium dichloride [synthesized based on the method described in patent literature JP 5455354B]
Transition metal compound (B-2):
isopropylidene(cyclopentadienyl)(2,7-di-tert-butylfluorenyl)zirconium dichloride [synthesized based on the method described in patent literature JP H04-069394A] Component (G-1): lauryldiethanolamine (manufactured by Kao Corporation)
Component (G-2): EMULGEN (registered trademark)108 (manufactured by Kao Corporation)

<Synthesis of prepolymerized catalyst (XP-1)>

In a 270-L internal volume reactor equipped with a stirrer, 10 kg of silica manufactured by Fuji Silysia Chemical, Ltd. (average particle size: 70 um, specific surface area: 340 $m^2/g$, pore volume: 1.3 $cm^3/g$, calcined at 250°C) as the solid support (S) was suspended in 77 L of toluene under a nitrogen atmosphere, followed by cooling to 0 to 5°C. To this suspension, 20.4 L of a solution of methylaluminoxane in toluene (3.5 mol/L in terms of Al atom) as the component (C) was added dropwise over30 minutes. In this case, the temperature in the system was kept at 0 to 5°C. After the reaction was continued at 0 to 5°C for 30 minutes, the temperature was raised over about 1.5 hours to 95 to 100°C, and the reaction was continued at 95 to 100°C for 4 hours. Thereafter, the temperature was lowered to normal temperature, the supernatant was removed by decantation, further washing was conducted twice with toluene, and a toluene slurry in a total amount of 58.0 L was prepared. A portion of the obtained slurry component was collected and the concentrations thereof were examined; the slurry concentration: 248.0 g/L and the Al concentration: 1.21 mol/L.

Then, a fully nitrogen-substituted 114-L internal volume reactor equipped with a stirrer was loaded with 6.1 L of the toluene slurry obtained above and 21.9 L of toluene, 5.4 L of a 8 mM solution of the transition metal compound (A-1) in toluene was added thereto, the components were brought into contact with one another at a temperature inside the system of 20 to 25°C for 1 hour, then the supernatant was removed by decantation, washing was conducted twice using hexane, and then a slurry in the total amount of 30.9 L was prepared. While the obtained slurry was adjusted to 10 to 15°C, 3.1 L of a 0.92 M solution of diisobutyl aluminum hydride in hexane was added thereto, supply of ethylene gas was started at a flow rate of 0.74 kg/hr. After 34.3 mL of 1-hexene was added, temperature raising was started. While the temperature inside the system was adjusted to 32 to 38°C, 34.3 mL of 1-hexene was added every hour, five times in total. Six hours after the ethylene supply was started, when the amount of ethylene supplied reached 4.5 kg, the ethylene supply was stopped. Thereafter, the inside of the system was fully substituted with nitrogen, the supernatant was removed by decantation, washing was conducted four times using hexane, and then a slurry in a total amount of 21.9 L was prepared. While the obtained slurry was maintained at 35 to 40°C, 6.1 L of a 10 g/L solution of the component (G-1) in hexane was added thereto, and the components were brought into contact with each other for two hours. After a 43-L internal volume evaporative dryer equipped with a stirrer was loaded with the total amount of the obtained slurry under a nitrogen atmosphere, the pressure inside the dryer was reduced to -68 kPaG over 60 minutes. When -68 kPaG was reached, vacuum drying was conducted for about 4.3 hours to remove hexane and the volatiles in the prepolymerized catalyst component. The pressure was further reduced to -100 kPaG. When -100 kPaG was reached, vacuum drying was conducted for 8 hours to obtain 6.2 kg of a prepolymerized catalyst (XP-1). A portion of the obtained prepolymerized catalyst (XP-1) was collected, and the composition was examined; 0.56 mg of a Zr atom was contained per 1 g of the prepolymerized catalyst component.

<Synthesis of prepolymerized catalyst (XP-2)>

In accordance with the method for producing the prepolymerized catalyst component (XP-1) described in patent literature JP 5943941B, 6.1 kg of a prepolymerized catalyst (XP-2) was obtained.

<Production of ethylene polymer>

[Production Example 1]

(Production of ethylene-α-olefin copolymer (A-1))

An ethylene polymer was produced by a gas phase polymerization process using a fluidized bed-type gas phase polymerization reactor. After 24 kg of spherical ethylene polymer particles having an average particle size of 900 um was introduced in advance in a reactor and then nitrogen was supplied thereto to form a fluidized bed, ethylene, hydrogen, 1-hexene, a prepolymerized catalyst, and Electrostripper (registered trademark) EA were continuously supplied to achieve a steady state under the polymerization conditions shown in Table 1. A polymerization reaction product was continuously extracted from the reactor and dried in a dryer to obtain a powder of an ethylene-α-olefin copolymer (A-1).

[Production Examples 2 to 6, 9 to 10]

(Production of ethylene-α-olefin copolymers (A-2) to (A-6), (A-9), and (A-10))

Powders of ethylene-α-olefin copolymers (A-2) to (A-6), (A-9), and (A-10) were obtained in the same manner as in Production Example 1 except that the polymerization conditions were changed as described in Table 8. In Table 8, CHEMISTAT (registered trademark) 2500 (manufactured by Sanyo Chemical Industries, Ltd.), a component which has not been used in Production Example 1, is described.

[Production Example 7]

(Production of ethylene-α-olefin copolymer (a-7))

A powder of an ethylene-α-olefin copolymer (a-7) was obtained using the prepolymerized catalyst component (XP-2), in accordance with the method for producing the ethylene polymer (α-1) described in patent literature JP 5943941B.

<Measurement of physical properties of polymers>

[Ethylene-α-olefin copolymer (A-1)]

To the powder of the ethylene-α-olefin copolymer (A-1) obtained in Production Example 1, 850 ppm of SUMILIZER GP (manufactured by SUMITOMO CHEMICAL COMPANY, LIMITED) and 210 ppm of calcium stearate (manufactured by NITTO KASEI CO., LTD.) were added as heat-resistant stabilizers. After meltkneading using a twin-screw co-rotating 46 mmφ extruder manufactured by Ikegai Corp. under conditions of a set temperature of 200°C and a screw rotation speed of 300 rpm, followed by extrusion into a strand form, which was cut to obtain pellets. The physical properties were measured using the obtained pellets as a sample for measurement. The measurement results are shown in Table 9.

[Ethylene-α-olefin copolymers (A-2) to (a-7), (A-9), and (A-10)]

Pellets were prepared and the physical properties were measured in the same manner as for the physical property measurement of the ethylene-α-olefin copolymer (A-1) except that the ethylene-α-olefin copolymer (A-1) was changed to any one of ethylene-α-olefin copolymers (A-2) to (a-7), (A-9), and (A-10) obtained in Production Examples 2 to 7. The measurement results are shown in Table 9.

[Ethylene polymer (a-8)]

Suntec-LD M2504 (density: 927 kg/$m^3$, MFR: 0.4 g/10 min), a high-pressure low-density polyethylene manufactured by Asahi Kasei Corporation, was subjected to physical property measurement in the same manner as for the ethylene-α-olefin copolymer (A-1) in Production Example 1. The measurement results are shown in Table 9.

[Ethylene-α-olefin copolymer (B-1)]

EVOLUE SP1510 manufactured by Prime Polymer Co., Ltd. was subjected to physical property measurement in the same manner as for the ethylene-α-olefin copolymer (A-1) in Production Example 1. The measurement results

are shown in Table 10.

[Ethylene-α-olefin copolymer (B-2)]

EVOLUE SP2120 manufactured by Prime Polymer Co., Ltd. was subjected to physical property measurement in the same manner as for the ethylene-α-olefin copolymer (A-1) in Production Example 1. The measurement results are shown in Table 10.

[Ethylene-α-olefin copolymer (B-3)]

EVOLUE SP1520 manufactured by Prime Polymer Co., Ltd. was subjected to physical property measurement in the same manner as for the ethylene-α-olefin copolymer (A-1) in Production Example 1. The measurement results are shown in Table 10.

[Ethylene-α-olefin copolymer (B-4)]

EVOLUE SP1540 manufactured by Prime Polymer Co., Ltd. was subjected to physical property measurement in the same manner as for the ethylene-α-olefin copolymer (A-1) in Production Example 1. The measurement results are shown in Table 10.

<Production of ethylene resin composition>

[Example 1]

20 wt% of the pellets of the ethylene-α-olefin copolymer (A-1) and 80 wt% of the pellets of the ethylene-α-olefin copolymer (B-1) were dry-blended, and the dry-blended pellets were subjected to inflation molding evaluation. The results of evaluation are shown in Table 11.

[Example 2]

20 wt% of the pellets of the ethylene-α-olefin copolymer (A-1) and 80 wt% of the pellets of the ethylene-α-olefin copolymer (B-2) were dry-blended, and the resultant was subjected to inflation molding evaluation. The results of evaluation are shown in Table 11.

[Example 3]

20 wt% of the pellets of the ethylene-α-olefin copolymer (A-2) and 80 wt% of the pellets of the ethylene-α-olefin copolymer (B-2) were dry-blended, and the dry-blended pellets were subjected to inflation molding evaluation. The results of evaluation are shown in Table 11.

[Example 4]

20 wt% of the pellets of the ethylene-α-olefin copolymer (A-3) and 80 wt% of the pellets of the ethylene-α-olefin copolymer (B-1) were dry-blended, and the dry-blended pellets were subjected to inflation molding evaluation. The results of evaluation are shown in Table 11.

[Example 5]

20 wt% of the pellets of the ethylene-α-olefin copolymer (A-3) and 80 wt% of the pellets of the ethylene-α-olefin copolymer (B-2) were dry-blended, and the dry-blended pellets were subjected to inflation molding evaluation. The results of evaluation are shown in Table 11.

[Example 6]

20 wt% of the pellets of the ethylene-α-olefin copolymer (A-4) and 80 wt% of the pellets of the ethylene-α-olefin copolymer (B-1) were dry-blended, and the dry-blended pellets were subjected to inflation molding evaluation. The results of evaluation are shown in Table 11.

[Example 7]

20 wt% of the pellets of the ethylene-α-olefin copolymer (A-4) and 80 wt% of the pellets of the ethylene-α-olefin copolymer (B-2) were dry-blended, and the dry-blended pellets were subjected to inflation molding evaluation. The results of evaluation are shown in Table 11.

[Example 8]

20 wt% of the pellets of the ethylene-α-olefin copolymer (A-5) and 80 wt% of the pellets of the ethylene-α-olefin copolymer (B-1) were dry-blended, and the dry-blended pellets were subjected to inflation molding evaluation. The results of evaluation are shown in Table 11.

[Example 9]

20 wt% of the pellets of the ethylene-α-olefin copolymer (A-5) and 80 wt% of the pellets of the ethylene-α-olefin copolymer (B-2) were dry-blended, and the dry-blended pellets were subjected to inflation molding evaluation. The results of evaluation are shown in Table 11.

[Example 10]

20 wt% of the pellets of the ethylene-α-olefin copolymer (A-6) and 80 wt% of the pellets of the ethylene-α-olefin copolymer (B-1) were dry-blended, and the dry-blended pellets were subjected to inflation molding evaluation. The results of evaluation are shown in Table 11.

[Example 11]

40 wt% of the pellets of the ethylene-α-olefin copolymer (A-2) and 60 wt% of the pellets of the ethylene-α-olefin copolymer (B-3) were dry-blended, and the dry-blended pellets were subjected to inflation molding evaluation. The results of evaluation are shown in Table 11.

[Example 12]

8 wt% of the pellets of the ethylene-α-olefin copolymer (A-3) and 92 wt% of the pellets of the ethylene-α-olefin copolymer (B-1) were dry-blended, and the dry-blended pellets were subjected to inflation molding evaluation. The results of evaluation are shown in Table 11.

[Example 13]

75 wt% of the pellets of the ethylene-α-olefin copolymer (A-9) and 25 wt% of the pellets of the ethylene-α-olefin copolymer (B-1) were dry-blended, and the dry-blended pellets were subjected to inflation molding evaluation. The results of evaluation are shown in Table 12.

[Example 14]

75 wt% of the pellets of the ethylene-α-olefin copolymer (A-9) and 25 wt% of the pellets of the ethylene-α-olefin copolymer (B-4) were dry-blended, and the dry-blended pellets were subjected to inflation molding evaluation. The results of evaluation are shown in Table 12.

[Example 15]

60 wt% of the pellets of the ethylene-α-olefin copolymer (A-10) and 40 wt% of the pellets of the ethylene-α-olefin copolymer (B-4) were dry-blended, and the dry-blended pellets were subjected to inflation molding evaluation. The results of evaluation are shown in Table 12.

[Example 16]

90 wt% of the pellets of the ethylene-α-olefin copolymer (A-10) and 10 wt% of the pellets of the ethylene-α-olefin copolymer (B-1) were dry-blended, and the dry-blended pellets were subjected to inflation molding evaluation.

The results of evaluation are shown in Table 12.

[Comparative Example 1]

40 wt% of the pellets of the ethylene-α-olefin copolymer (a-7) and 60 wt% of the pellets of the ethylene-α-olefin copolymer (B-1) were dry-blended, and the dry-blended pellets were subjected to inflation molding evaluation. The results of evaluation are shown in Table 11.

[Comparative Example 2]

20 wt% of the pellets of the ethylene-α-olefin copolymer (a-7) and 80 wt% of the pellets of the ethylene-α-olefin copolymer (B-1) were dry-blended, and the dry-blended pellets were subjected to inflation molding evaluation. The results of evaluation are shown in Table 11.

[Comparative Example 3]

80 wt% of the pellets of the ethylene-α-olefin copolymer (a-7) and 20 wt% of the pellets of the ethylene-α-olefin copolymer (B-1) were dry-blended, and the dry-blended pellets were subjected to inflation molding evaluation. The results of evaluation are shown in Table 11.

[Comparative Example 4]

20 wt% of the pellets of the ethylene polymer (a-8) and 80 wt% of the pellets of the ethylene-α-olefin copolymer (B-1) were dry-blended, and the dry-blended pellets were subjected to inflation molding evaluation. The results of evaluation are shown in Table 11. The melt tension of the composition could not be measured because of the molten resin was broken during stretching.

[Comparative Example 5]

20 wt% of the pellets of the ethylene polymer (a-8) and 80 wt% of the pellets of the ethylene-α-olefin copolymer (B-2) were dry-blended, and the dry-blended pellets were subjected to inflation molding evaluation. The results of evaluation are shown in Table 11.

[Comparative Example 6]

80 wt% of the pellets of the ethylene-α-olefin copolymer (a-7) and 20 wt% of the pellets of the ethylene-α-olefin copolymer (B-1) were dry-blended, and the dry-blended pellets were subjected to inflation molding evaluation. The results of evaluation are shown in Table 12.

[Comparative Example 7]

Inflation molding evaluation was conducted using the ethylene-α-olefin copolymer (B-4). The melt film stability was poor, and no film could be collected stably.

[Comparative Example 8]

Inflation molding evaluation was conducted using the ethylene-α-olefin copolymer (B-1). The results of evaluation are shown in Table 12. The resin pressure in molding was high, the bubble stability was somewhat poor, and fluctuations were observed.

Table 8

| | | | Production Example 1 | Production Example 2 | Production Example 3 | Production Example 4 | Production Example 5 | Production Example 6 | Production Example 9 | Production Example 10 |
|---|---|---|---|---|---|---|---|---|---|---|
| Ethylene-α-olefin copolymer | | | A-1 | A-2 | A-3 | A-4 | A-5 | A-6 | A-9 | A-10 |
| Polymerization conditions | Prepolymerized catalyst component | Number | XP-1 | XP-1 | XP-1 | XP-1 | XP-1 | XP-1 | XP-1 | XP-1 |
| | Prepolymerized catalyst supply rate | g/hr | 7.2 | 8.8 | 6.0 | 8.5 | 3.6 | 5.2 | 6.7 | 8.4 |
| | Ethylene supply rate | $Nm^3/h$ | 8.5 | 10.5 | 10.5 | 6.0 | 8.8 | 6.4 | 7.9 | 10.5 |
| | Hydrogen supply rate | $Nm^3/h$ | Not supplied | 0.030 | 0.0260 | 0.0370 | 0.0085 | 0.0027 | 0.012 | 0.030 |
| | 1-Hexene supply rate | kg/h | 1.30 | 1.00 | 0.80 | 0.60 | 0.18 | 0.28 | 0.93 | 0.95 |
| | Polymerization temperature | °C | 71 | 75 | 75 | 75 | 80 | 79 | 75 | 75 |
| | Polymerization pressure | MPa•G | 1.7 | 2.0 | 2.0 | 1.7 | 2.0 | 1.7 | 1.7 | 2.0 |
| | Ethylene partial pressure | MPa•A | 1.0 | 1.5 | 1.5 | 1.0 | 1.5 | 1.0 | 1.0 | 1.5 |
| | Electrostripper EA supply rate | g/h | 0.065 | 0.126 | 0.121 | 0.051 | - | 0.032 | 0.070 | 0.059 |
| | CHEMISTAT 2500 supply rate | g/h | - | - | - | - | 0.145 | - | - | - |
| | Gas linear speed | m/sec | 0.70 | 0.70 | 0.70 | 0.70 | 0.70 | 0.70 | 0.70 | 0.70 |
| | Residence time | hr | 3.7 | 3.2 | 4.9 | 8.0 | 7.3 | 4.8 | 3.4 | 4.1 |
| | Gas phase: hydrogen/ethylene ratio | m.r. ($\times 10^{-4}$) | 6 | 15 | 10 | 16 | 10 | 10 | 10 | 14 |
| | Gas phase: 1-hexene/ethylene ratio | m.r. | 0.009 | 0.009 | 0.008 | 0.007 | 0.006 | 0.004 | 0.007 | 0.009 |
| Polymer yield | | kg/h | 6.5 | 7.4 | 4.9 | 3.0 | 3.3 | 5.0 | 7.0 | 5.9 |

Table 9

| | | Production Example 1 | Production Example 2 | Production Example 3 | Production Example 4 | Production Example 5 |
|---|---|---|---|---|---|---|
| Ethylene-α-olefin copolymer | | A-1 | A-2 | A-3 | A-4 | A-5 |
| Density | $kg/m^3$ | 905 | 911 | 913 | 909 | 921 |
| MFR (190°C, 2.16 kg) | g/10 min | 0.71 | 1.81 | 0.45 | 1.18 | 0.7 |
| MT (190°C) | 9 | 15.1 | 9.1 | 14.9 | 10.7 | 15.7 |
| [η] | dl/g | 1.54 | 1.33 | 1.55 | 1.43 | 1.51 |
| n* | P | 7.83E+04 | 4.49E+04 | 1.05E+05 | 6.15E+04 | 7.61E+04 |
| MT/η* | g/P | 1.93E-04 | 2.02E-04 | 1.42E-04 | 1.74E-04 | 2.06E-04 |
| no | P | 4.00E+05 | 1.30E+05 | 5.00E+05 | 2.26E+05 | 3.50E+05 |
| [η] /$Mw^{0.776}$×10^4 | | 0.94 | 1.01 | 1.00 | 0.83 | 0.86 |
| $\eta_0$/$Mw^{3.4}$×10^13 | | 1.34 | 1.18 | 2.19 | 0.62 | 0.87 |

(continued)

| | | | | | | |
|---|---|---|---|---|---|---|
| GPC-visco | | | | | | |
| Mn | | 2.56E+04 | 2.22E+04 | 2.51E+04 | 2.24E+04 | 3.32E+04 |
| Mw | | 2.72E+05 | 2.02E+05 | 2.51E+05 | 2.88E+05 | 2.96E+05 |
| Mz | | 1.88E+06 | 1.70E+06 | 1.59E+06 | 2.83E+06 | 2.22E+06 |
| Mw/Mn | | 10.63 | 9.13 | 9.99 | 12.88 | 8.92 |
| Mz/Mw | | 6.94 | 8.41 | 6.32 | 9.82 | 7.51 |
| Mz/Mw-Mw/Mn | | -3.69 | -0.72 | -3.67 | -3.06 | -1.41 |
| $^1$H NMR | | | | | | |
| vinyl | /1000C | | 0.3 | 0.3 | 0.3 | 0.2 |
| Vinylidene | /1000C | | 0.1 | 0.1 | 0.1 | 0.1 |
| Disubstituted internal olefin | /1000C | | 0.1 | 0.1 | 0.2 | 0.2 |
| Trisubstituted internal olefin | /1000C | | 0.2 | 0.1 | 0.1 | 0.1 |
| Total | /1000C | | 0.7 | 0.6 | 0.7 | 0.6 |
| DSC melting curve peak | | Multiple | Multiple | Multiple | Multiple | Multiple |
| | | Production Example 6 | Production Example 7 | Ethylene polymer (a-8) | Production Example 9 | Production Example 10 |
| Ethylene-$\alpha$-olefin copolymer | | A-6 | a-7 | | A-9 | A-10 |
| Density | kg/m$^3$ | 931 | 920 | 927 | 910 | 909 |
| MFR (190°C, 2.16 kg) | g/10 min | 0.57 | 1.2 | 0.4 | 0.64 | 1.9 |
| MT (190°C) | g | 17.3 | 8.2 | 17.2 | 13.7 | 8.3 |
| [η] | dl/g | 1.61 | 1.51 | | 1.58 | 1.36 |
| n* | P | 8.85E+04 | 6.50E+04 | 1.05E+04 | 8.91E+04 | 48500 |
| MT/η* | g/P | 1.96E-04 | 1.26E-04 | 1.65E-03 | 1.53E-04 | 1.72E-04 |
| no | P | 5.00E+05 | 7.83E+05 | | 4.10E+05 | 1.24E+05 |
| [η] /Mw$^{0.776}$×10^4 | | 1.04 | 1.39 | | 0.72 | 0.89 |
| $\eta_0$/Mw$^{3.4}$×10^13 | | 2.21 | 16.11 | | 0.38 | 0.59 |
| GPC-visco | | | | | | |
| Mn | | 2.38E+04 | 2.44E+04 | | 2.40E+04 | 2.21E+04 |
| Mw | | 2.50E+05 | 1.59E+05 | | 3.96E+05 | 2.45E+05 |
| Mz | | 1.87E+06 | 7.68E+05 | | 3.95E+06 | 3.10E+06 |
| Mw/Mn | | 10.52 | 6.52 | | 16.51 | 11.10 |
| Mz/Mw | | 7.46 | 4.82 | | 9.98 | 12.66 |
| Mz/Mw-Mw/Mn | | -3.05 | -1.70 | | -6.53 | 1.55 |

(continued)

| $^1H$ NMR | | | | | | |
|---|---|---|---|---|---|---|
| vinyl | /1000C | 0.1 | | | 0.2 | 0.2 |
| Vinylidene | /1000C | 0.1 | | | 0.1 | 0.1 |
| Disubstituted internal olefin | /1000C | 0.3 | | | 0.2 | 0.1 |
| Trisubstituted internal olefin | /1000C | 0.2 | | | 0.2 | 0.1 |
| Total | /1000C | 0.7 | | | 0.7 | 0.6 |
| DSC melting curve peak | | | | | Multiple | Multiple |

Table 10

| Ethylene-α-olefin copolymer | | B-1 | B-2 | B-3 | B-4 |
|---|---|---|---|---|---|
| | | SP1510 | SP2120 | SP1520 | SP1540 |
| Density | | 915 | 921 | 913 | 913 |
| MFR | g/10 min. | 1.0 | 2.0 | 2.0 | 3.8 |
| [η] | dl/g | 2.05 | 1.70 | 1.71 | 1.5 |
| Mw (GPC-Visco) | | 115000 | 91000 | 92000 | 79000 |
| $[\eta]/Mw^{0.766}\times10^4$ | | 2.42 | 2.41 | 2.40 | 2.37 |

Table 11

| | | | Example 1 | Example 2 | Example 3 | Example 4 | Example 5 | Example 6 | Example 7 | Example 8 | Example 9 |
|---|---|---|---|---|---|---|---|---|---|---|---|
| Ethylene-α-olefin copolymer | Number | | A-1 | A-1 | A-2 | A-3 | A-3 | A-4 | A-4 | A-5 | A-5 |
| | Mass fraction | % by mass | 20 | 20 | 20 | 20 | 20 | 20 | 20 | 20 | 20 |
| Ethylene-α-olefin copolymer | Number | | B-1 | B-2 | B-2 | B-1 | B-2 | B-1 | B-2 | B-1 | B-2 |
| | Mass fraction | % by mass | 80 | 80 | 80 | 80 | 80 | 80 | 80 | 80 | 80 |
| Ethylene resin composition | Melt tension of composition | g | 7.6 | 4.9 | 3.6 | 7.0 | 4.5 | 6.6 | 3.9 | 6.7 | 4.9 |
| | Resin pressure | MPa | 43 | 31 | 31 | 48 | 32 | 43 | 30 | 40 | 31 |
| | Film thickness | μm | 40 | 40 | 40 | 40 | 40 | 40 | 40 | 40 | 40 |
| | Haze | % | 12.7 | 11.0 | 8.2 | 12 | 12.7 | 10.6 | 9.8 | 9.6 | 10.0 |
| | Internal haze | % | 1.8 | 1.9 | 2.3 | 1.3 | 1.7 | 1.4 | 1.8 | 1 | 1.4 |
| | Gloss at 20° | % | 19 | 22 | 59 | 24 | 22 | 30 | 35 | 34 | 31 |
| | Dart impact (method A) | g | >1500 | 341 | 414 | >1500 | 316 | >1500 | 423 | >1500 | 240 |
| | Tensile modulus MD | MPa | 226 | 280 | 329 | 254 | 348 | 256 | 329 | 269 | 397 |
| | Tensile modulus TD | MPa | 308 | 373 | 389 | 330 | 423 | 327 | 422 | 371 | 504 |
| | Blocking test (50°C × 10 kg × 3 days) | | | | | | | | | | |
| | Blocking force | mN | 65 | 12 | 446 l | 23 | 0 | 68 | 26 | 74 | 18 |

| | | | Example 10 | Example 11 | Example 12 | Comparative Example 1 | Comparative Example | Comparative 2 Example 3 | Comparative Example 4 | Comparative Example 5 |
|---|---|---|---|---|---|---|---|---|---|---|
| Ethylene-α-olefin copolymer | Number | | A-6 | A-2 | A-3 | a-7 | a-7 | a-7 | a-8 | a-8 |
| | Mass fraction | % by mass | 20 | 40 | 8 | 40 | 20 | 80 | 20 | 20 |

(continued)

| | | | Example 10 | Example 11 | Example 12 | Comparative Example 1 | Comparative Example | Comparative 2 Example 3 | Comparative Example 4 | Comparative Example 5 |
|---|---|---|---|---|---|---|---|---|---|---|
| Ethylene-α-olefin copolymer | Number | | B-1 | B-3 | B-1 | B-1 | B-1 | B-1 | B-1 | B-2 |
| | Mass fraction | % by mass | 80 | 60 | 92 | 60 | 80 | 20 | 80 | 80 |
| Ethylene resin composition | Melt tension of composition | g | 5.9 | 6.0 | 4.4 | - | - | - | Not fable | 6.8 |
| | Resin pressure | MPa | 37 | 27 | 44 | - | - | - | 41 | 30 |
| | Film thickness | μm | 40 | 40 | 40 | 40 | 40 | 40 | 40 | 40 |
| | Haze | % | 15.8 | 8.6 | 9.3 | 40 | 22 | 57 | 4.2 | 5.5 |
| | Internal haze | % | 1.1 | 0.8 | 1.7 | 1.5 | 1.2 | 2.1 | 0.6 | 0.8 |
| | Gloss at 20° | % | 12 | 30 | 45 | 2.1 | 5.9 | 1.0 | 66 | 57 |
| | Dart impact (method A) | g | 1269 | 659 | >1500 | 470 | 906 | 284 | 395 | 191 |
| | Tensile modulus MD | MPa | 332 | 204 | 242 | 292 | 287 | 395 | 305 | 397 |
| | Tensile modulus TD | MPa | 439 | 246 | 293 | 398 | 385 | 535 | 412 | 521 |
| | Blocking test (50°C × 10 kg × 3 days) | | | | | | | | | |
| | Blocking force | \| mN \| | 0 | 577 | 54 | 0 | 0 | 0 \| | 7278 | 134 |

Table 12

| | | | Example 13 | Example 14 | Example 15 | Example 16 | Comparative Example 3 | Comparative Example 7 | Comparative Example 8 |
|---|---|---|---|---|---|---|---|---|---|
| Ethylene-α-olefin copolymer | Number | | A-9 | A-9 | A-10 | A-10 | a-7 | | |
| | Mass fraction | % by mass | 75 | 75 | 60 | 90 | 80 | | |
| Ethylene-α-olefin copolymer | Number | | B-1 | B-4 | B-4 | B-1 | B-1 | B-4 | B-1 |
| | Mass fraction | % by mass | 25 | 25 | 40 | 10 | 20 | 100 | 100 |
| Ethylene resin composition | Melt tension of composition | 9 | 12.3 | 9.4 | 5.9 | 8.1 | - | - | - |
| | Resin pressure | MPa | 27.0 | 21.1 | 22.8 | 21.3 | 20 | - | 40.1 |
| | Melt film stability | | AA | AA | AA | AA | AA | CC | BB |
| | Film thickness | μm | 40 | 40 | 40 | 40 | 40 | Not formable | 40 |
| | Haze | % | 49 | 49 | 13 | 20 | 57 | | 15 |
| | Internal haze | % | 1.1 | 1.1 | 0.7 | 0.9 | 2.1 | | 2.1 |
| | Gloss at 20° | % | 1 | 1 | 13 | 6 | 1 | | 27 |
| | Dart impact (method A) | 9 | 593 | 499 | 459 | 417 | 284 | | >1500 |
| | Blocking test (50°C × 10 kg × 3 days) | | | | | | | | |
| | Blocking force | mN | 0 | 0 | 215 | 80 | 0 | | 1617 |

As clearly seen from Table 11, Examples excel in the transparency of the films in comparison with Comparative Examples 1 to 3, excel in the blocking resistance of the films in comparison with Comparative Example 4, and excel in the mechanical strength (dart impact) of the films in comparison with Comparative Example 5.

## Claims

1. An ethylene resin composition (Z) comprising:

   an ethylene-α-olefin copolymer (A) which is a copolymer of ethylene and one or more α-olefins having 4 to 10 carbon atoms and which satisfies the following requirements (1) to (4); and
   an ethylene-α-olefin copolymer (B) which is a copolymer of ethylene and one or more α-olefins having 4 to 10 carbon atoms and which satisfies the following requirements (a) to (c) :

   (1) the density is in a range of 890 kg/$m^3$ or more and 935 kg/$m^3$ or less,
   (2) the melt flow rate (MFR) at 190°C under a load of 2.16 kg is in a range of 0.1 g/10 min or more and less than 3.0 g/10 min,
   (3) the ratio [MT/η* (g/P)] of the melt tension [MT (g)] at 190°C to the shear viscosity [η* (P)] at 200°C and an angular velocity of 1.0 rad/s is in a range of $1.20 \times 10^{-4}$ or more and $2.90 \times 10^{-4}$ or less, and
   (4) the zero-shear viscosity [$\eta_0$ (P)] at 200°C and the weight-average molecular weight (Mw) measured by GPC-viscometry (GPC-VISCO) satisfy the following equation (Eq-1):

$$0.01 \times 10^{-13} \times Mw^{3.4} \leq \eta_0 \leq 3.5 \times 10^{-13} \times Mw^{3.4} \quad \cdots \text{(Eq-1)},$$

   (a) the density is in a range of 890 kg/$m^3$ or more and 930 kg/$m^3$ or less,
   (b) the melt flow rate (MFR) at 190°C under a load of 2.16 kg is in a range of 0.1 g/10 min or more and 10 g/10 min or less, and
   (c) the intrinsic viscosity [[η] (dl/g)] measured in decalin at 135°C and the weight-average molecular weight (Mw) measured by GPC-viscometry (GPC-VISCO) satisfy the following equation (Eq-4):

$$1.90 \times 10^{-4} \times Mw^{0.776} \leq [\eta] \leq 2.80 \times 10^{-4} \times Mw^{0.776} \quad \cdots \text{(Eq-4)}$$

2. The ethylene resin composition (Z) according to claim 1, having a mass fraction ($W_A$) of the ethylene-α-olefin copolymer (A) that is 1% by mass or more and 50% by mass or less, and a mass fraction ($W_B$) of the ethylene-α-olefin copolymer (B) that is 50% by mass or more and 99% by mass or less, provided that the sum of $W_A$ and $W_B$ is 100% by mass.

3. The ethylene resin composition (Z) according to claim 1, having a mass fraction ($W_A$) of the ethylene-α-olefin copolymer (A) that is more than 50% by mass and 99% by mass or less, and a mass fraction ($W_B$) of the ethylene-α-olefin copolymer (B) that is 1% by mass or more and less than 50% by mass, provided that the sum of $W_A$ and $W_B$ is 100% by mass.

4. The ethylene resin composition (Z) according to any of claims 1 to 3, wherein the ethylene-α-olefin copolymer (A) satisfies the following requirement (5):
   (5) the number-average molecular weight (Mn), the weight-average molecular weight (Mw), and the z-average molecular weight (Mz) measured by GPC-viscometry (GPC-VISCO) satisfy the following equation (Eq-2):

$$-7.0 \leq Mz/Mw - Mw/Mn \leq 2.0 \quad \cdots \text{(Eq-2)}.$$

5. The ethylene resin composition (Z) according to any of claims 1 to 4, wherein the ethylene-α-olefin copolymer (A) further satisfies the following requirement (6):
   (6) the ratio Mz/Mw of the z-average molecular weight (Mz) to the weight-average molecular weight (Mw) measured by GPC-viscometry (GPC-VISCO) is in a range of 4.0 or more and 15.0 or less.

**6.** The ethylene resin composition (Z) according to any of claims 1 to 5, wherein the ethylene-α-olefin copolymer (A) further satisfies the following requirement (7):
(7) the intrinsic viscosity [[η] (dl/g)] measured in decalin at 135°C and the weight-average molecular weight (Mw) measured by GPC-viscometry (GPC-VISCO) satisfy the following equation (Eq-3):

$$0.7 \times 10^{-4} \times Mw^{0.776} \leq [\eta] \leq 1.65 \times 10^{-4} \times Mw^{0.776} \cdots (Eq\text{-}3).$$

**7.** The ethylene resin composition (Z) according to any of claims 1 to 6, wherein the ethylene-α-olefin copolymer (A) satisfies the following requirement (8):
(8) the total number (/1000 C) of vinyls, vinylidenes, disubstituted internal olefins, and trisubstituted internal olefins per 1000 carbon atoms measured by $^1$H-NMR is in a range of 0.1 or more and 1.0 or less.

**8.** The ethylene resin composition (Z) according to any of claims 1 to 7, wherein the ethylene-α-olefin copolymer (A) satisfies the following requirement (9):
(9) a plurality of peaks is present in a melting curve obtained by differential scanning calorimetry (DSC).

**9.** The ethylene resin composition (Z) according to any one of claims 1 to 8, further comprising a thermoplastic resin excluding the ethylene-α-olefin copolymer (A) and the ethylene-α-olefin copolymer (B).

**10.** A shaped article comprising the ethylene resin composition (Z) according to any one of claims 1 to 9.

**11.** A film comprising the ethylene resin composition according to any one of claims 1 to 9.

**12.** A multilayer film comprising a layer comprising the ethylene resin composition (Z) according to any one of claims 1 to 9.

## INTERNATIONAL SEARCH REPORT

International application No. **PCT/JP2022/015848**

**A. CLASSIFICATION OF SUBJECT MATTER**

***C08F 210/02***(2006.01)i; ***C08F 210/16***(2006.01)i; ***C08L 23/08***(2006.01)i
FI: C08L23/08; C08F210/16; C08F210/02

According to International Patent Classification (IPC) or to both national classification and IPC

**B. FIELDS SEARCHED**

Minimum documentation searched (classification system followed by classification symbols)

C08F210; C08L23

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-61655 A (JAPAN POLYETHYLENE CORP) 30 March 2017 (2017-03-30) claims, paragraphs [0035], [0041], [0092], examples B-1, example 1 | 1-7, 9-12 |
| Y | | 1-7, 9-12 |
| A | | 8 |
| Y | JP 2019-59933 A (MITSUI CHEMICALS INC) 18 April 2019 (2019-04-18) claims, example 13 | 1-7, 9-12 |
| A | | 8 |
| Y | JP 2019-59723 A (MITSUI CHEMICALS INC) 18 April 2019 (2019-04-18) claims, example 4 | 1-7, 9-12 |
| A | | 8 |
| Y | JP 2015-21112 A (JAPAN POLYETHYLENE CORP) 02 February 2015 (2015-02-02) claims, paragraphs [0009], [0020]-[0028] | 1-7, 9-12 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 June 2022** | **28 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2022/015848

C. DOCUMENTS CONSIDERED TO BE RELEVANT

| Category* | Citation of document, with indication, where appropriate, of the relevant passages | Relevant to claim No. |
|---|---|---|
| X<br>A | JP 2012-214781 A (JAPAN POLYETHYLENE CORP) 08 November 2012 (2012-11-08)<br>claims, paragraphs [0008], [0060], [0063], [0073], examples | 1-7, 9-12<br>8 |

Form PCT/ISA/210 (second sheet) (January 2015)

**INTERNATIONAL SEARCH REPORT**
**Information on patent family members**

International application No.
**PCT/JP2022/015848**

| Patent document cited in search report | Publication date (day/month/year) | Patent family member(s) | Publication date (day/month/year) |
|---|---|---|---|
| JP 2017-61655 A | 30 March 2017 | (Family: none) | |
| JP 2019-59933 A | 18 April 2019 | (Family: none) | |
| JP 2019-59723 A | 18 April 2019 | (Family: none) | |
| JP 2015-21112 A | 02 February 2015 | (Family: none) | |
| JP 2012-214781 A | 08 November 2012 | US 2016/0244544 A1<br>claims, paragraphs [0043], [0162], [0167], [0188], examples<br>CN 103582669 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H07026079 A
- JP H02276807 A
- JP H04213309 A
- WO 9308221 A
- JP H08311260 A
- JP 2006233207 A
- JP 2009197225 A
- WO 2013099927 A
- JP 2014177506 A
- JP 2006509059 A
- WO 2009080216 A
- JP 2011 A
- JP 500800 A
- JP 2012012307 A
- JP 2012121882 A
- JP 2014196319 A
- JP 2014513735 A
- JP 2015063495 A
- JP 2016501952 A
- JP 2019059933 A
- JP H10109996 A
- JP 2011502192 A
- WO 2014123212 A
- JP H07042301 B
- JP H06220126 A
- JP H06220128 A
- JP H11140113 A
- JP H11310607 A
- JP 2000038410 A
- JP 2000095810 A
- WO 201055652 A
- JP 2003171412 A
- JP H01501950 A
- JP H01502036 A
- JP H03179005 A
- JP H03179006 A
- JP H03207703 A
- JP H03207704 A
- US 5321106 B
- JP 5455354 B
- JP H04069394 A
- JP 5943941 B


### Non-patent literature cited in the description


- **C GABRIEL ; H. MUNSTEDT.** *J. Rheol.,* 2003, vol. 47 (3), 619
- **WALTHER BURCHARD.** Branched Polymer. *ADVANCES IN POLYMER SCIENCE,* 1999, vol. II, 137
- **H. SAIKI ; S. MAKOTO ; T. MASAO ; S. MORIHIKO ; Y. AKIHIRO.** *J. Polym. Sci., A: Polym. Chem.,* 2000, vol. 38, 4641
- *Organometallics,* 1994, vol. 13, 954
- *Organometallics,* 2006, vol. 25, 1217
- *Bioorg. Med. Chem.,* 2008, vol. 16, 7399
- *Organometallics,* 2011, vol. 30, 5744
- *Organometallics,* 2012, vol. 31, 4962
- *Chem. Eur. J.,* 2012, vol. 18, 4174
- *Macromolecules,* 2001, vol. 34, 2072
- *Macromolecules,* 2003, vol. 36, 9325
- *Organometallics,* 2004, vol. 23, 5332
- *Eur. J. Inorg. Chem.,* 2005, 1003
- *Eur. J. Inorg. Chem.,* 2009, 1759
- *Organometallics,* 1999, vol. 18, 5347
- *Organometallics,* 2012, vol. 31, 4340